# EUROPÄISCHE PATENTSCHRIFT

(11) **EP 2 137 269 B1**
(45) Veröffentlichungstag und Bekanntmachung des Hinweises auf die Patenterteilung: **13.04.2011**
(21) Anmeldenummer: 08707204.7
(22) Anmeldetag: 23.01.2008
(51) Int. Cl.: C09D 7/00

(54) **HOCHKRATZFESTE BESCHICHTUNGEN MIT GUTER WITTERUNGS- UND RISSBESTÄNDIGKEIT**
HIGHLY SCRATCH-RESISTANT COATINGS HAVING GOOD WEATHERING AND CRACK RESISTANCE
REVÊTEMENTS PRÉSENTANT UNE RÉSISTANCE ÉLEVÉE AUX RAYURES ET UNE BONNE RÉSISTANCE AUX INTEMPÉRIES ET AUX CRAQUELURES

(30) Priorität: 15.03.2007 DE 102007013242
(43) Veröffentlichungstag der Anmeldung: 30.12.2009
(73) Patentinhaber: BASF Coatings GmbH, 48165 Münster (DE)
(72) Erfinder: POPPE, Andreas, Quing Pu District, Shanghai (CN); WEGNER, Egon, 48268 Greven (DE); KUTSCHERA, Michael, 83339 Chieming (DE); ESSIG, Manfred, 67697 Otterberg (DE)
(74) Vertreter: Leifert & Steffan
(86) Internationale Anmeldenummer: PCT/EP2008/000487
(87) Internationale Veröffentlichungsnummer: WO 2008/110230

(56) Entgegenhaltungen:
- EP-A- 0 465 805
- EP-A- 1 178 088
- EP-A- 1 371 693
- WO-A-01/09261
- WO-A-01/70891
- WO-A-02/04566
- WO-A-03/013199
- WO-A-03/044100
- WO-A-2007/024838
- US-A1- 2002 115 781
- US-A1- 2004 022 706
- US-A1- 2004 109 853
- US-A1- 2004 176 529
- US-B1- 6 384 119

## Beschreibung

### Gebiet der Erfindung

Die vorliegende Erfindung betrifft zumindest teilweise vernetzte Beschichtungen, die hochkratzfest sind und gleichzeitig eine gute Witterungs- und Rissbeständigkeit aufweisen, sowie ein Verfahren zur Steuerung der Eigenschaften von vernetzten Beschichtungen.

### Stand der Technik

Aus der WO05/028550 sind funktionale Polymere bekannt, welche ein erstes, oberflächenaktives Segment und ein zweites, funktionales Segment aufweisen, welches die gewünschten Eigenschaften des funktionalen Polymers erzeugt. Diese funktionalen Polymere werden mit unmodifizierten thermoplastischen Bulk-Polymeren gemischt und die so erhaltenen Mischungen werden zur Herstellung von Formteilen oder ähnlichen Artikeln oder von Beschichtungen eingesetzt, um gezielt die Eigenschaften der Oberflächen der erhaltenen Artikel bzw. Beschichtungen zu steuern. Die oberflächenaktive Modifizierung von einzelnen, filmbildenden Bestandteilen eines Beschichtungsmittels, welches erst nach Applikation zu einer Beschichtung mit gezielten Oberflächeneigenschaften vernetzt wird, ist in der WO05/028550 aber nicht beschrieben.

Außerdem werden die in der WO05/028550 beschriebenen funktionalen Polymeren für biologische bzw. medizinische Anwendungen, beispielsweise für Kosmetika, für die biozide Ausrüstung von Handschuhen, Kleidung, medizinischen Geräten u.ä. oder für die biozide Ausrüstung von Luftfiltern u.ä. sowie für die Herstellung von diagnostischen Chips durch eine bioaktive Oberflächenausrüstung der Chips, eingesetzt.

Zwar werden u.a. auch alkoxysilanfunktionelle, oberflächenaktive Formteile und Beschichtungen beschrieben, bei denen die Bulk-Polymeren teilweise mit polymeren Additiven behandelt werden, die Alkoxysilangruppen aufweisen. Die Härtung der Alkoxysilangruppen erfolgt dabei durch eine mehrstündige Feuchtigkeitsbehandlung oder durch Behandeln mit wässrigen Säuren. Diese im Bereich der Kunststoffteile übliche Behandlung ist jedoch im Bereich der Automobillackierung mit einem erheblichen Zusatzaufwand verbunden und daher nicht erwünscht. Außerdem sind im Bereich der Automobillackierung üblicherweise eingesetzte Klarlacke im Allgemeinen unverträglich mit den erforderlichen wässrigen Säuren, so dass eine Übertragung der in der WO05/028550 beschriebenen funktionalen Beschichtungen auf den Bereich der Automobillackierung nicht möglich ist.

Ferner sind in der noch nicht veröffentlichen amerikanischen Patentanmeldung mit der Serial Number 11/227,867 vom 15. September 2005 Beschichtungsmittel beschrieben, die Umsetzungsprodukte (I) eines Dimerfettsäurediols mit einem Isocyanatoalkyltrialkoxysilan enthalten.

Die unter Verwendung dieser Beschichtungsmittel erhaltenen Beschichtungen zeichnen sich insbesondere durch einen sehr hohen Glanz aus. Mit zunehmendem Anteil der Beschichtungsmittel an den Umsetzungsprodukten (I) aus einem Dimerfettsäurediol mit einem Isocyanatoalkyltrialkoxysilan nimmt die Härte und die Beständigkeit gegenüber Lösemittel, gemessen in Doppelhüben Methylethylketon, ab. Im Bereich der Automobillackierung werden jedoch zunehmend Beschichtungen mit einer verbesserten Härte und Beständigkeit und somit einer verbesserten Kratzfestigkeit gefordert.

Außerdem sind aus der EP-B-1 295 914 Beschichtungsmittel mit einem verbesserten Öl- und Wasser-abstoßenden Effekt bekannt, die ein Alkoxysilylgruppen enthaltendes Acrylharz, ein Acrylharz, enthaltend Alkoxysilylgruppen und Dimethylpolysiloxan-Nebenketten, ein Hydroxyl- und Epoxy-gruppen enthaltendes Acrylharz sowie ein Polyesterharz mit hoher Säurezahl enthalten. Aufgrund der relativ breiten Molekulargewichtsverteilung der Poly(meth)acrylate mit Alkoxysilangruppen sind aber im Allgemeinen in den Klarlacken nur Festkörpergehalte von weniger als 50 Gew.- % realisierbar. Bei höheren Anteilen sind die Lacke aufgrund ihrer hohen Viskosität nur noch schwer verarbeitbar. Weiterhin können sich bei der Aushärtung in Konkurrenz zu den erwünschten Si-O-Si-Netzpunkten durch Umesterung der-Si(O-Alkyl)3-Gruppen mit Estereinheiten der benachbarten Alkyl(meth)acrylat-Comonomereinheiten unerwünschte Si-O-C-Netzpunkte bilden, welche hydrolyselabil sind und zu einer reduzierten Chemikalienbeständigkeit der resultierenden Beschichtung führen. Da die hochbeanspruchbaren OEM-Klarlacke eine möglichst hohe Witterungsbeständigkeit aufweisen sollen, ist es von Belang, dass die Poly(meth)-acrylat-Netzwerke im Vergleich zu Polyurethannetzwerken eine reduzierte Witterungsbeständigkeit aufweisen.

Ein unterschiedlicher Vernetzungsgrad der Beschichtung in der oberflächennahen Schicht und im Bulk ist dort jedoch ebenso wenig beschrieben wie die Steuerung der Eigenschaften der Beschichtung mittels dieser Unterschiede im Vernetzungsgrad.

Die EP-B-1 204 701 beschreibt Beschichtungsmittel, die neben Nanoteilchen eine oberflächenaktive Substanz enthalten, wodurch es in der Beschichtung zu einer Anreicherung der Nanoteilchen an der Oberfläche kommt, was zu einer verbesserten Kratzfestigkeit der Beschichtungen führt. Derartige Strukturen weisen meist nur eine geringe Ausdehnung auf, ähnlich wie eine Perlenkette an der Oberfläche.

Aufgrund der extrem starken interpartikulären Wechselwirkungen und der meist nicht vollständigen Stabilisierung der Partikel kommt es jedoch häufig zu Agglomeration von Partikeln und somit zu einer negativen Beeinflussung des Verlaufs und des Appearance der resultierenden Beschichtungen. Des weiteren ist eine extrem gute Stabilisierung der Partikel notwendig, um ein breites Verarbeitungsfenster zu gewährleisten und mögliche Ablagerungen in den Ringleitungen zu vermeiden. Ein unterschiedlicher Vernetzungsgrad der Beschichtung in der oberflächennahen Schicht und im Bulk ist auch in dieser Schrift ebenso wenig beschrieben wie die Steuerung der Eigenschaften der Beschichtung mittels dieser Unterschiede im Vernetzungsgrad.

Außerdem sind aus der DE 10 2004 050 747 A1 und der noch nicht veröffentlichten deutschen Patentanmeldung DE P 10 2005 045228.0-44 Beschichtungsmittel bekannt, die Addukte mit Alkoxysilanfunktionalität enthalten. Die dort beschriebenen Beschichtungsmittel werden unter Verwendung geeigneter Katalysatoren und gegebenenfalls in Anwesenheit von geringen Mengen Wasser unter Ausbildung von Si-O-Si-Netzwerken ausgehärtet. Die Beschichtungsmittel werden unter anderem als Klarlacke in OEM-Aufbauten eingesetzt. Sie führen zu Beschichtungen mit einer sehr hohen Kratzfestigkeit, sind jedoch häufig hinsichtlich der Witterungsstabilität und bezüglich der Rissbildung weiter zu verbessern. Nachteilig ist außerdem der hohe Preis der in diesen Beschichtungsmitteln in recht hohen Mengen enthaltenen Addukte mit Alkoxysilanfunktionalität.

Ferner sind aus der WO01/98393 Beschichtungsmittel mit einer verbesserten Haftung auf Aluminiumsubstraten bekannt, die neben einem hydroxylgruppenhaltigen Bindemittel und einem isocyanatgruppenhaltigen Vernetzer ein Silanoligomer (B) mit mindestens zwei Isocyanatgruppen als wesentlichen Bestandteil enthalten, wobei dieses Oligomer (B) das Umsetzungsprodukt einer isocyanatfunktionellen Verbindung (A) mit einem Kupplungsreagenz (X) ist, welches mindestens eine alkoxysilanfunktionelle Gruppe und mindestens eine gegenüber Isocyanatgruppen reaktive Gruppe enthält.

Eine Modifizierung der Silanoligomere (B) mit oberflächenaktiven Komponenten ist in dieser Schrift nicht beschrieben. So kann es bei den in der WO01/98393 beschriebenen Beschichtungen zwar auch zu Zonen mit erhöhtem Vernetzungsgrad kommen, aber aufgrund der fehlenden Oberflächenmodifizierung zumindest einer der filmbildenden Komponenten sind diese Zonen mit erhöhtem Vernetzungsgrad statistisch über die gesamte Beschichtung verteilt und eine gezielte Steuerung der Eigenschaften der Beschichtung mittels dieser Unterschiede im Vernetzungsgrad ist bei den dort beschriebenen Beschichtungen nicht möglich.

Weiterhin ist es aus der US 2006-0217472 A1 bekannt, dass die Kratzfestigkeit von Beschichtungen auf Basis von Polyurethanen verbessert werden kann, wenn man zu Beschichtungsmitteln, die ein hydroxylgruppenhaltiges Bindemittel, einen isocyanatgruppenhaltigen Vernetzer und einen Metallkatalysator für die OH/NCO-Reaktion enthalten, ein Aminoallen, wie z.B. Bis(3-propyltrimethoxysilyl)amin, oder dessen Umsetzungsprodukte mit Isocyanaten zusetzt. Eine Modifizierung der Aminosilane mit oberflächenaktiven Komponenten ist in der US 2006-0217472 A1 jedoch ebenso wenig beschrieben wie ein unterschiedlicher Vernetzungsgrad der Beschichtung in der oberflächennahen Schicht und im Bulk.

Schließlich sind aus der WO 01/09260 Beschichtungsmittel bekannt, die Polysiloxane (a) mit mindestens einer reaktiven Gruppe, Verbindungen (b), die mindestens eine, mit den reaktiven Gruppen der Polysiloxane reaktionsfähige Gruppe aufweisen, sowie ggf. Partikel (c) und weitere Bestandteile enthalten. Somit bilden die Polysiloxane bei der Aushärtereaktion mit den Verbindungen (b) nicht ein Si-O-Si-Netzwerk aus.

Ein unterschiedlicher Vernetzungsgrad der Beschichtung in der oberflächennahen Schicht und im Bulk ist auch in dieser Schrift ebenso wenig beschrieben wie die Steuerung der Eigenschaften der Beschichtung mittels dieser Unterschiede im Vernetzungsgrad.

WO 2007/024838 offenbart modifizierte Nanopartikel auf Basis von pyrogenem Siliciumdioxid und deren Verwendung in Beschichtungsstoffen. Die Nanopartikel zeigen eine verbesserte Disperglerbarkeit bzw. ein verbessertes Reagglomerationsverhalten in den Beschichtungsstoffen; die resultierenden Beschichtungen besitzen eine gute Kratzfestigkeit.

EP 1 371 693 offenbart ein Verfahren zur Verbesserung der Kratzfestigkeit von Beschichtungen durch Einsatz von vernetzten, polymeren Nanopartikeln, d. h. makromolekulare Struktureinheiten mit einer Partikelgröße von 1-100 nm.

US 2004/176529 offenbart eine Beschichtungszusammensetzung, die mindestens ein Polysiloxan sowie Partikel, beispielsweise anorganische Nanopartikel, enthält. Die daraus hergestellten Beschichtungen besitzen eine gute Kratzfestigkeit, die auch nach Witterungseinflüssen erhalten bleibt.

US 2004/109853 offenbart neue Beschichtungen, die eine Biomolekülzusammensetzung enthalten, wobei die Biomolekülzusammensetzung eine Phosphorsäuretriesterhydrolase als Enzym enthält. Die Beschichtung wird zur Dekontamination von Oberflächen, die mit Organophophorverbindungen kontaminiert sind, verwendet.

US 2004/022706 beschreibt Beschichtungsmassen, die eine Schicht eines organisch-anorganischen Verbunds. Es wird eine hohe Lagerstabiliät erreicht.

WO 03/044100 offenbart einen Prozess, bei dem ein faseriges organisches Material in eine Slurry eingebracht wird. Diese Slurry wird einer Beschichtung zugesetzt. Hierdurch wird eine hohe Steinschlagfestigkeit generiert.

US 2002/115781 beschreibt Beschichtungs- und Tintenzusammensetzungen, die bestimmte organische Lösemittel, enthalten.

WO 03/013188 beschreibt Beschichtungen, die eine Abschirmung gegen elektromagnetische Interferenz aufweist; US 6384119 offenbart Beschichtungsstoffe enthaltend flüchtige lineare Siloxanflüssigkeiten, wodurch Beschichtungen mit hervorragenden DOI (distinctness of image resultieren.

WO 01/70891 offenbart eine härtbare Beschichtungszusammensetzung, die ein filmbildendes Polymer, ein polymeres Additiv mit oberflächenschützenden Gruppen und einen Vernetzer enthält. Durch die oberflächenschützenden Gruppen, z. B. Lichtstabillsatoren wie Piperidine oder UV-Absorbern wie Triazinen wird die unter Verwendung der härtbaren Beschichtungszusammensetzung hergestellte Beschichtung geschützt.

EP 1 178 088 offenbart eine Klariackzusammensetzung, die ein vernetzbares filmbildendes Harz und ein Vernetzungsmittel sowie 0,01 bis 2 Gewichtstelle eines Leitersilkoncopolymers enthält. Die hergestellten Lackschichten zeigen z. B. eine ausgezeichnete wasserabweisende Wirkung.

WO 02/04566 offenbart Beschichtungszusammensetzungen, die nicht mehr als 2 Gewichtsprozent von nicht-flüchtigen SI-Bestandteilen sowie nicht mehr als 5 Gewichtsprozent von speziellen flüchtigen, linearen Si-Komponenten enthält. Es lassen sich mit der Beschichtungszusammensetzung solche Beschichtungen herstellen, die eine verbesserte Beständigkeit gegen visuelle Defekte, die z. B. durch Oberflächenkontaminationen wie Stippen verursacht werden können.

WO 01/09261 beschreibt Zusammensetzungen zur Beschichtung, die wenigstens ein Polysiloxan, wenigstens ein Polyol und/oder eine Carbamatgruppen enthaltene Verbindung enthält, die mit den funktionellen Gruppen der vorgenannten Gruppen reaktiv ist. Es resultiert eine hohe Kratzfestigkeit der daraus hergestellten Beschichtungen.

EP 0 465 805 offenbart Reaktionsprodukte von silylalkyl- oder silylaryl-Isocyanaten und z. B. Alkoholen zur Verbesserung der Dispergierbarkeit von glimmerartigen Partikeln.

### Aufgabe

Der vorliegenden Erfindung lag daher die Aufgabe zugrunde, Beschichtungsmittel zur Verfügung zu stellen, die es erlauben, die Eigenschaften der resultierenden Beschichtungen gezleit einzustellen. Vorteilhafterwelse sollten durch diese Beschichtungsmittel Beschichtungen hersteilbar sein, die sich an ihrer Oberfläche in mindestens einer Eigenschaft von den Eigenschaften der Beschichtung im darunter angeordneten Volumenelement (Bulk) unterscheiden.

Insbesondere sollten Beschichtungsmittel zur Verfügung gestellt werden, die zu Beschichtungen mit einer hohen Mikroeindringhärte und einer hohen Kratzfestigkeit, insbesondere einer hohen sogenannten Trockenkratzfestigkeit, üblicherweise bestimmt im Crockmeter-Test, führen. Gleichzeitig sollten diese Beschichtungsmittel zu einem hochgradig witterungsstabilen Netzwerk führen. Ferner sollten die Beschichtungsmittel die üblicherweise im Bereich der Automobileserienlackierung gestellten Anforderungen erfüllen. Die Beschichtungsmittel sollen daher insbesondere auch einen guten Haze, d.h. keinen Glanzschleier, einen guten Verlauf sowie einen sehr guten optischen Gesamteindruck (Appearance) aufweisen. Schließlich sollten die gewünschten Eigenschaften möglichst kostengünstig erhalten werden.

### Lösung der Aufgabe

Diese Aufgabe wird überraschenderweise gelöst durch eine einen Vernetzungsgrad von 5 bis 100% aufweisende Beschichtung (K), die aufgebaut ist aus
1. einer oberflächennahen Beschichtungszone (K1) und
2. einer Volumen-Beschichtungszone (K2),
wobei das Verhältnis der Trockenfilmschichtdicke der oberflächennahen Beschichtungszone (K1) zu der Trockenfilmschichtdicke der Volumen-Beschichtungszone (K2) kleiner als 0,1 ist und
wobei die Beschichtung (K) aus einem Beschichtungsmittel (B) erhältlich ist, welches mindestens zwei unterschiedliche, vernetzbare Komponenten (D1) und (D2) enthält, wobei zumindest ein Teil der Komponente (D1) eine oder mehrere oberflächenaktive Struktureinheiten (O) ausgewählt aus der Gruppe der Kohlenwasserstoff-Reste und deren Derivaten sowie aus der Gruppe der Siloxan-Reste aufweist;
dadurch gekennzeichnet, dass
(i) die Beschichtung sowohl in der Zone (K1) als auch in der Zone (K2) einen Vernetzungsgrad von 5 bis 100% aufweist und
(ii) die Vernetzungsdichte der Beschichtung in der Zone (K1) höher Ist als die Vernetzungsdichte der Beschichtung in der Zone (K2).

Gegenstand der Erfindung sind weiterhin auch effekt- und/oder farbgebende Mehrschichtlackierungen, bei denen die transparente Beschichtung eine erfindungsgemäße Beschichtung, ist sowie Verfahren zur Herstellung dieser Mehrschichtlacklerungen.

### Vortelle der Erfindung

Es ist überraschend und war nicht vorhersehbar, dass durch die Bereitstellung von Beschichtungsmitteln, die mindestens zwei unterschiedliche vernetzbare Komponenten (D1) und (D2) enthalten und bei denen zumindest ein Tell der Komponente (D1) eine oder mehrere oberflächenaktive Struktureinheiten (O) aufweist, die Elgenschaften der resultierenden Beschichtungen gezielt über die Komponente (D1) sowie über das Verhältnis der Vernetzungsdichte der Beschichtung in der oberflächennahen Zone (K1) zu der Vernetzungsdichte der Beschichtung in der Volumen-Beschichtungszone (K2) gesteuert werden können. Die oberflächennahe Beschichtungszone (K1) wird insbesondere Im Wesentlichen durch die zumindest teilweise vernetzte Komponente (D1) und die Volumenbeschichtungs-Zone (K2) im Wesentilchen durch die zumindest teilweise vernetzte Komponente (D2) gebildet. Erfindungsgemäß ist außerdem die Vernetzungsdichte des aus der Komponente (D1) gebildeten Netzwerkes (N1) höher als die Vernetzungsdichte des aus der Komponente (D2) gebildeten Netzwerkes (N2). Dadurch gelingt es, die Kratzfestigkeit, insbesondere eine hohe sogenannte Trocken-Kratzfestigkeit, üblicherweise bestimmt im Crockmeter- Test, und/oder die Härte der Beschichtung zu verbessern und gleichzeitig eine hohe Witterungs- und Rissbeständigkeit zu gewährleisten. Außerdem zeigen die resultierenden Beschichtungen einen sehr guten optischen Gesamteindruck (Appearance) und keinen Haze (Glanzschleier). Schließlich erfüllen die Beschichtungen die üblicherweise an eine Klarlackbeschichtung im Bereich der Automobilserienlackierung gestellten Anforderungen.

### Ausführliche Beschreibung der Erfindung

### Zumindest teilweise vernetzte Beschichtung (K)

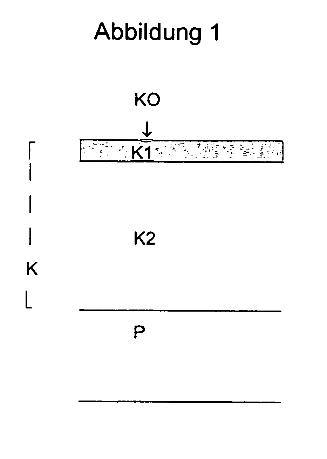

Die zumindest teilweise vernetzte Beschichtung (K) ist aufgebaut aus einer oberflächennahen Beschichtungszone (K1) und einer Volumen-Beschichtungszone (K2), wie dies in Abbildung 1 dargestellt ist. In dieser Abbildung 1 stellt (KO) die dem Substrat bzw. der sich unter der Beschichtung (K) befindlichen pigmentierten Schicht (P) abgewandte Oberfläche der Beschichtung (K) dar.

Unter der oberflächennahen Beschichtungszone (K1) wird im Folgenden der Teil der zumindest teilweise vernetzten Beschichtung (K) verstanden, der im Allgemeinen parallel zum Substrat bzw. der pigmentierten Schicht (P), auf welches das Beschichtungsmittel (B) appliziert wird, ist und der die der Luft zugewandte Oberfläche (also dem Substrat abgewandte Oberfläche) der Beschichtung bildet.

Unter der Volumen-Beschichtungszone (K2) wird im Folgenden der Teil der zumindest teilweise vernetzten Beschichtung (K) verstanden, der sich im Allgemeinen unter der oberflächennahen Beschichtungszone erstreckt und der im Allgemeinen ebenfalls parallel zum Substrat bzw. der pigmentierten Schicht (P) ist.

Die Schichtdicke der oberflächennahen Beschichtungszone (K1) liegt üblicherweise zwischen 1 nm und 500 nm, bevorzugt zwischen 10 nm und 200 nm, besonders bevorzugt zwischen 10 nm und 100 nm und ganz besonders bevorzugt zwischen 10 nm und 50 nm und/oder das Verhältnis der Trockenfilmschichtdicke der oberflächennahen Beschichtungszone (K1) zu der Trockenfilmschichtdicke der Volumen-Beschichtungszone (K2) ist kleiner als 0,1, bevorzugt kleiner als 0,01, besonders bevorzugt kleiner als 0,005.

Es ist erfindungswesentlich dass die Beschichtung (K) sowohl In der oberflächennahen Beschichtungszone (K1) als auch In der Volumen-Beschichtungszone (K2) zumindest teilweise vernetzt ist.

Im Folgenden bedeutet dabei zumindest teilweise vernetzt, dass die vernetzbaren Komponenten des Beschichtungsmittels (B) zumindest teilweise vernetzt sind. Der Vernetzungsgrad kann dabei je nach Anwendungszweck der Beschichtungen und je nach gewähren vernetzbaren Komponenten varileren. Der vernetzungsgrad liegt aber zwischen 5 und 100 %, bevorzugt zwischen 35 und 100%, besonders bevorzugt zwischen 50 und 100 %, wobei ein Vernetzungsgrad von 100 % eine vollständige Vernetzung bedeutet. Es kann Jedoch auch nur ein Vernetzungsgrad von maximal 85% erwünscht oder erreichbar sein.

Der Vernetzungsgrad kann dabei In dem Fachmann bekannter Weise mittels verschiedener Methoden, beispielsweise mittels DMTA Messungen (DMTA = Dynamisch-Mechanische-Thermo-Analyse), bestimmt werden. Die Dynamisch-Mechanische Thermo-Analyse ist eine allgemein bekannte Messmethode zur Bestimmung der viskoelastischen Eigenschaften von Beschichtungen und beispielsweise beschrieben in Murayarna, T., Dynamic Mechanical Analysis of Polymeric Material, Esevier, New York, 1978 und Loren W. HIII, Journal of Coatings Technology, Vol. 64. No. 808, May 1992, Selten 31 bis 33.

Die Durchführung der Messungen kann beispielsweise mit dem Gerät DMTA V der Firma Rheometrics Scientific mit einer Frequenz von 1 Hz und einer Amplitude von 0,2% sowie bei einer Heizrate von 2°C pro Minute und einer Frequenz von 1 Hz erfolgen.

Auch der spektroskopische Nachweis des Fehlens von freien funktionellen Gruppen, wie beispielsweise die IR-spektroskopische Untersuchung, dass keine freien Isocyanatgruppen mehr nachweisbar sind, kann bekanntermaßen zum Nachweis einer stattgefundenen Vernetzung herangezogen werden.

Die Vernetzungsreaktion kann dabei thermisch und/oder mittels Strahlung und/oder mittels Feuchtigkeit erfolgen, insbesondere erfolgt sie aber thermisch, ggf. zusammen mit Feuchtigkeit.

Die Beschichtung (K) ist dabei aus einem Beschichtungsmittel (B) erhältlich, welches mindestens zwei unterschiedliche, vernetzbare Komponenten (D1) und (D2) enthält. Es ist hierbei erfindungswesentlich, dass zumindest ein Teil der Komponente (D1) eine oder mehrere oberflächenaktive Struktureinheiten (O) aufweist.

Im Folgenden bedeutet dabei die Bedingung, dass zumindest ein Teil der Komponente (D1) eine oder mehrere oberflächenaktive Struktureinheiten (O) aufweist, dass je nach Anwendungszweck der Beschichtungen und je nach gewählten vernetzbaren Komponenten üblicherweise zwischen 30 und 100 %, bevorzugt zwischen 50 und 100%, besonders bevorzugt zwischen 80 und 100 %, und ganz besonders bevorzugt zwischen 90 und 100 % der Komponente (D1) eine oder mehrere oberflächenaktive Struktureinheiten (O) aufweisen.

Durch die oberflächenaktiven Struktureinheiten der vernetzbaren Komponente (D1) kommt es im Allgemeinen zu einer Anreicherung der Komponente (D1) in der oberflächennahen Beschichtungszone (K1), so dass nach Härtung des Beschichtungsmittels (B) im Allgemeinen die oberflächennahe Beschichtungszone (K1) im Wesentlichen durch die zumindest teilweise vernetzte Komponente (D1) und die Volumen-Beschichtungszone (K2) im Wesentlichen durch die zumindest teilweise vernetzte Komponente (D2) gebildet wird. Im Wesentlichen bedeutet in diesem Zusammenhang, dass mindestens 50 Gew.- %, bevorzugt mindestens 75% Gew.- % und besonders bevorzugt mindestens 90% Gew.- % der jeweiligen Zone (K1) bzw. (K2) aus der jeweiligen vernetzten Komponente (D1) bzw. (D2) gebildet werden.

Die zumindest teilweise vernetzte Beschichtung (K) weist aufgrund der Anreicherung der Komponente (D1) in der oberflächennahen Beschichtungszone (K1) im Allgemeinen eine chemische Uneinheitlichkeit in Form eines Gradienten senkrecht zur Oberfläche (KO) auf.

Der Gradient in der chemischen Uneinheitlichkeit führt dabei bevorzugt auch zu einem Gradienten in den physikalischen Eigenschaften senkrecht zur Oberfläche, bevorzugt zu einem Gradienten in der Kratzfestigkeit und/oder Steinschlagbeständigkeit und/oder Rissbeständigkeit und/oder Abwaschbarkeit und/oder Reparaturlackhaftung und/oder Benetzung und/oder optischem Farbeindruck und/oder Appearance.

Insbesondere weist die zumindest teilweise vernetzte Beschichtung (K) eine chemische Uneinheitlichkeit in Form eines Gradienten von Siliciumatomen des Typs (Si 1) und/oder des Typs (Si 2) 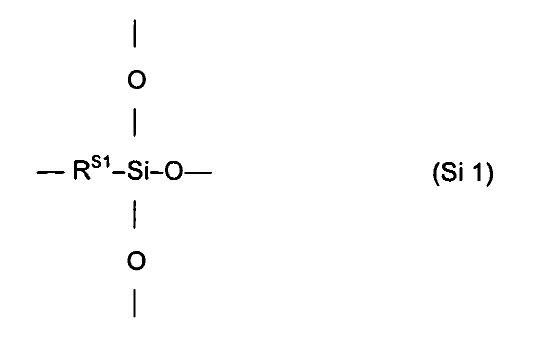 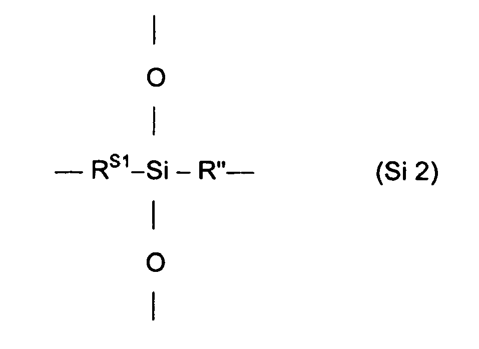 senkrecht zur Oberfläche (KO) auf, wobei
R^{S1} = organischer Rest, bevorzugt linearer und/oder verzweigter Alkylen- oder Cycloalkylenrest mit 1 bis 20 Kohlenstoffatomen, insbesondere Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen.

Dieser Gradient wird insbesondere durch eine entsprechende Auswahl der Komponente (D1) erzeugt, wobei bevorzugt Komponenten (D1), die zumindest teilweise über Alkoxysilangruppen vernetzen, eingesetzt werden. Ganz besonders bevorzugt wird der Gradient über die Verwendung der im Folgenden beschriebenen Addukte (A) mit Silanfunktionalität erzielt.

Der Gradient weist bevorzugt eine Halbwertstiefe < 1 µm, bevorzugt < 0,1 µm und besonders bevorzugt < 0,05 µm auf. Halbwertstiefe bedeutet dabei die Tiefe bzw. die Schichtdicke der zumindest teilweise vernetzten Beschichtung, bei welcher der Unterschied (=Gradient) in der chemischen Struktur bzw. in den physikalischen Eigenschaften zwischen Oberfläche (KO) und Volumenbeschichtungszone (K2) auf die Hälfte abgefallen ist.

Dabei ist im Allgemeinen die Vernetzungsdichte in der oberflächennahen Zone (K1) höher als die Vernetzungsdichte in der Volumen-Beschichtungszone (K2).

Es wird angenommen, dass hierdurch die zumindest teilweise vernetzte Beschichtung (K) eine höhere Härte, insbesondere Mikroeindringhärte, und eine höhere Kratzbeständigkeit, insbesondere eine höhere Trockenkratzbeständigkeit, aufweist als eine entsprechende Beschichtung (K'), die aus einem Beschichtungsmittel (B') erhalten wurde, das sich von dem Beschichtungsmittel (B) nur dadurch unterscheidet, dass es keine vernetzbare Komponente (D1) enthält. Gleichzeitig werden die oft mit einer verbesserten Kratzfestigkeit verbundenen Probleme einer zunehmenden Sprödigkeit und Rissanfälligkeit der Beschichtungen vermieden.

Über das Verhältnis der Vernetzungsdichte des aus der Komponente (D1) gebildeten Netzwerkes (N1) zu der Vernetzungsdichte des aus der Komponente (D2) gebildeten Netzwerkes (N2) können also gezielt die Eigenschaften der vernetzten Beschichtung (K) gesteuert werden.

### Vernetzbare Komponente (D1)

Die Beschichtung (K) ist aus einem Beschichtungsmittel (B) erhältlich, welches mindestens zwei unterschiedliche, vernetzbare Komponenten (D1) und (D2) enthält.

Es ist erfindungswesentlich, dass zumindest ein Teil der Komponente (D1) eine oder mehrere oberflächenaktive Struktureinheiten (O) aufweist. Unter oberflächenaktiver Struktureinheit werden hier und im Folgenden Reste verstanden, die dazu führen, dass sich die diesen Rest aufweisenden Komponenten aus dem Beschichtungsmittel (B) heraus an der Grenzfläche Luft/Beschichtung stark anreichern.

So können in den erfindungsgemäßen Beschichtungsmitteln (B) solche Komponenten (D1) eingesetzt werden, die von vornherein oberflächenaktive Struktureinheiten (O) aufweisen. Unter oberflächenaktiver Struktureinheit werden dabei Reste verstanden, die dazu führen, dass sich die diesen Rest tragenden Verbindungen aus dem Beschichtungsmittel heraus an der Grenzfläche Luft/Beschichtung stark anreichern.

Insbesondere werden erfindungsgemäß Beschichtungsmittel eingesetzt, bei denen die vernetzbare Komponente (D1) dadurch hergestellt worden ist, dass zumindest ein Teil der Komponente (D1) mit einer oder mehreren oberflächenaktiven Verbindungen (OV) modifiziert worden ist, wobei die Verbindungen (OV) die oberflächenaktive Struktureinhelt (O) aufweisen. Alternativ oder zusätzlich kann auch zumindest ein Teil einer Vorstufe der Komponente (D1) mit einer oder mehreren oberflächenaktiven Verbindungen (OV) modifiziert worden sein. Auch eine gleichzeitige Umsetzung mit der Verbindung (OV) während des Aufbaus der Komponente (D1) ist möglich (sogenannte "in-situ-Reaktion").

### Oberflächenaktive Struktureinhelt (O)

Die oberflächenaktiven Struktureinheiten (O) werden ausgewählt aus der Gruppe der Kohlenwasserstoff-Reste und deren Derivaten, insbesondere der fluorierten Kohlenwasserstoffreste, der Fettsäurereste und der Reste von Fettsäurederivaten sowie aus der Gruppe der ggf. substituierten Siloxan-Reste und besonders bevorzugt der Siloxan-Reste.

Bevorzugt weist die oberflächenaktive Verbindung (OV) mindestens eine Hydroxyl-, Epoxy-, Isocyanat-, Carbamat-, Carboxyl-, Anhydrid-, Amin-, und/oder Thiolgruppe und/oder ethylenisch ungesättigte Doppelbindung auf und/oder die vernetzbare Komponente (D1) und/oder eine Vorstufe der vernetzbaren Komponente (D1) weist eine komplementäre funktionelle Gruppe, ausgewählt aus der Gruppe der Hydroxyl-, Epoxy-, Isocyanat-, Carbamat-, Carboxyl-, Anhydrid-, Amin- und/oder Thiolgruppen und/oder der ethylenisch ungesättigten Doppelbindungen auf.

Insbesondere werden Verbindungen (OV) eingesetzt, die eine geringere Oberflächenspannung als die unmodifizierte Komponente (D1) oder als die zur Herstellung der Komponente (D1) eingesetzten Aufbaukomponenten aufweisen. Bevorzugt sollte die Oberflächenspannung der Verbindung (OV) um mindestens 1 mN/m und besonders bevorzugt um mindestens 5 mN/m niedriger sein als die Oberflächenspannung der unmodifizierten Komponente (D1) oder als die Oberflächenspannung der zur Herstellung der Komponente (D1) eingesetzten Aufbaukomponenten.

Die Messung der Oberflächenspannung erfolgt dabei bei einer Temperatur von 23 °C. Zur Bestimmung der Oberflächenspannung wurde die sogenannte Ringmethode eingesetzt. Dabei misst man mit einem sogenannten Ring - Tensiometer die maximale Kraft, die beim Herausziehen eines Platinringes aus der Phasengrenze der Flüssigkeit am Umfang des Ringes angreift. Dabei wird die Oberfläche der zu untersuchenden Flüssigkeit zur Messung der Oberflächenspannung langsam vergrößert, wobei sich das System immer im Gleichgewichtszustand befindet. Die Kraft, die zur Vergrößerung der Oberfläche notwendig ist, wird gemessen und in die Oberflächenspannung umgerechnet. Eine detailliertere Erläuterung zu der Methode ist u. a. im Buch "Lackeigenschaften messen und steuern" von G. Meichsner, Th. G. Mezger, J. Schröder, herausgegeben von Ulrich Zoll, erschienen im Vincentz Verlag 2003, Seite 96 ff. beschrieben.

Bevorzugt wird die Verbindung (OV) so ausgewählt, dass die resultierende, die oberflächenaktive Struktureinheit (O) aufweisende Komponente (D1) in dem Beschichtungsmittel oberflächenaktiv ist. Unter oberflächenaktiver Komponente (D1) werden hier und im Folgenden solche Komponenten (D1) verstanden, die sich aus dem Beschichtungsmittel heraus an der Grenzfläche Luft/Beschichtung stark anreichern. Diese Anreicherung der Komponente (D1) an der Grenzfläche Luft/Beschichtung wird üblicherweise dadurch erreicht, dass eine gewisse Unverträglichkeit der Komponente (D1) mit dem filmbildenden Material (D2) besteht. Allerdings sollte diese Unverträglichkeit wiederum nicht zu hoch sein, um Verlaufsstörungen des Beschichtungsmittels zu vermeiden. Des weiteren sind bei der Verwendung der oberflächenaktiven Komponente (D1) die weiteren physikalischen Limitierungen der resultierenden Lackformullerung sowie die des zu beschichtenden Substrates zu berücksichtigen. Ein besonders wichtiger Aspekt ist neben - einer ausreichenden Verträglichkeit - insbesondere die Benetzung der zu beschichtenden Substrate. Diese kann u. a. durch die Messung der kritischen Oberflächenspannung nach der Zismann - Methode abgeschätzt werden. Eine detailliertere Erläuterung zu diesem Verfahren ist u. a. im Buch "Lackeigenschaften messen und steuern" von G. Meichsner, Th. G. Mezger, J. Schröder, herausgegeben von Ulrich Zoll, erschienen im Vincentz Verlag 2003, beschrieben. In diesem Zusammenhang sind derartige Komponenten (D1) besonders bevorzugt, die es - allein oder im Zusammenwirken mit weiteren grenzflächenaktiven Additiven - ermöglichen, eine Oberflächenspannung der Jeweiligen Lackformulierung einzustellen, die unterhalb der kritischen Oberflächenspannung für das jeweilige zu beschichtende Substrat liegt.

Besonders bevorzugt sind Komponenten (D1), die es - allein oder im Zusammenwirken mit weiteren grenzflächenaktiven Additiven - ermöglichen, eine Oberflächenspannung der jeweiligen Lackformulierung einzustellen, die mindestens 5 mN / m unterhalb der kritischen Oberflächenspannung für das Jeweilige zu beschichtende Substrat liegt.

Wie bereits ausgeführt, kommen als Verbindungen (OV) mit niedriger Oberflächenspannung solche Verbindungen in Betracht, die mindestens einen oberflächenaktiven Rest aufweisen. Die oberflächenaktiven Reste der Verbindung (O) werden ausgewählt aus der Gruppe der Kohlenwasserstoff-Reste und deren Derivaten, wie beispielsweise der fluorierten Kohlenwasserstoffreste, der Fettsäurereste und deren Derivaten sowie der Siloxan-Reste und deren Derivaten, wie beispielsweise der fluorierten Siloxan-Reste, ausgewählt.

Die oberflächenaktiven Kohlenwasserstoff-Reste sind insbesondere lineare oder verzweigte aliphatische Ketten, die bevorzugt mindestens 5 C-Atome und besonders bevorzugt 12 bis 36 C-Atome aufweisen und die gegebenenfalls noch entsprechende Substituenten, wie beispielsweise Fluorreste, tragen können. Hinsichtlich der höheren Homologen sind verzweigte Strukturen oder Strukturen, die Aufgrund von Funktionalisierungen bei Raumtemperatur keine Kristallisation zeigen, bevorzugt.

Beispiele für als Verbindung (OV) eingesetzte Verbindungen mit einem Kohlenwasserstoff-Rest sind insbesondere Alkane, Alkene und Alkine sowie deren Derivate, die zusätzlich noch mindestens eine funktionelle Gruppe aufweisen.

Neben den monofunktionellen Bausteinen können auch difunktionelle Verbindungen (OV) oder höher funktionelle Verbindungen (OV) eingesetzt werden.

Beispiele für Verbindungen mit niedrigerer Oberflächenspannung, die reaktiv zur unmodifizierten Komponente (D1) sind, sind insbesondere aliphatische Alkohole, Fettsäuren und Fettsäurederivate mit jeweils linearen oder verzweigten aliphatischen Ketten mit im Allgemeinen mindestens 5 C - Atomen und bevorzugt mit 12 bis 36 C-Atomen. Besonders bevorzugt sind lineare und / oder verzweigte Fettsäurederivate mit 12 - 36 C- Atomen.

Ganz allgemein sind die gesättigten Verbindungen (OV) bevorzugt. Dies ist begründet in der hohen Witterungsstabilität, die die resultierenden Beschichtungen garantieren müssen.

Beispielhaft für derartige Verbindungen können Octanol, Nonanol, Decanol, Undecylalkohol, Dodecylalkohol, und die entsprechend höheren Homologe genannt werden. Aufgrund der geringeren Kristallisationsneigung ist z.B. der Einsatz von Isostearinalkohol (z. B erhältlich unter dem Handelsnamen Isofol von der Firma Condea) gegenüber dem Einsatz von n-Stearylalkohol bevorzugt.

Beispiele für difunktionelle Ausgangsstoffe sind z. B. Isomere des Dihydroxyoctan, Isomere des Dihydroxynonan, Isomere des Dihydroxydecan, Isomere des Dihydroxyundecan und entsprechend höhere Homologe.

Als oberflächenaktive Bausteine geeignet sind auch die Derivate von gesättigten und/oder ungesättigten Fettsäuren, insbesondere von gesättigten und/oder ungesättigten Fettsäuren mit 5 bis 30 Kohlenstoffatomen im Molekül, wie z. B. Reste der Valeriansäure, Capronsäure, der Önanthsäure, Caprylsäure, Perlagonsäure, Caprinsäure, Undecylsäure, Laurinsäure, Myristinsäure, Palmitinsäure, Stearinsäure, Ölsäure, Elaidinsäure, Arachinsäure, Behensäure, Lignocerinsäure, Cerotinsäure, Melissinsäure, Linolsäure, Ricinensäure, Ricinolsäure, Linolensäure, Arachidonsäure, Clupanodonsäure, alpha-Elaeostearinsäure, alpha-Licansäure, alpha-Parinarsäure, Ricinolsäure und Isanolsäure und Mischungen dieser Fettsäuren und/oder die entsprechenden Hydroxysäuren der genannten Fettsäuren bzw. deren Mischungen. So können als oberflächenaktive Verbindung (OV) auch Hydroxyvaleriansäure, Hydroxycapronsäure, Hydroxystearinsäure, Hydroxylaurinsäure, Ricinolsäure oder deren Mischungen eingesetzt werden.

Geeignet sind ferner auch die entsprechenden Reste von Dimer- und Trimerfettsäuren sowie deren Mischungen. Beispielhaft seien hier Dimerfettsäurediole genannt. Sie sind im Handel beispielsweise unter der Bezeichnung Pripol® der Firma Unichema erhältlich. Sie sind herstellbar durch Reduktion der entsprechenden Dimerfettsäuren, wie dies beispielsweise beschrieben ist in Karlheinz Hill, "Fats and Oils as Oleochemical Raw Materials," Pure Appl. Chem., Vol. 72, Nr. 7, Seiten 1255-1264 (2000), insbesondere Seite 1261. Beispielsweise geeignet ist das im Handel erhältliche PRIPOL 2033 der Unichema North America, Chicago, III., USA.

Auch epoxidierte Fettsäuren können als Reaktionspartner für Anhydrid - funktionelle unmodifizierte Komponenten (D1) eingesetzt werden.

Weitere Beispiele für entsprechende Verbindungen (OV) mit einem Kohlenwasserstoffrest als oberflächenaktivem Rest sind aminfunktionelle Verbindungen mit niedriger Oberflächenspannung.

Beispielhaft für derartige Verbindungen können Octylamin, Nonylamin, Decylamin, Undecylamin, Dodecylamin, und die entsprechend höheren Homologe genannt werden.

Neben den monofunktionellen Bausteinen können auch difunktionelle Verbindungen (OV) oder höher funktionelle Verbindungen (OV) eingesetzt werden. Beispiele für difunktionelle Ausgangsstoffe sind z. B. Isomere des Diamino-octans, Isomere des Diamino-nonans, Isomere des Diamino-decans, Isomere des Diamino-undecans und entsprechende höhere Homologe.

Neben den Aminfunktionellen Verbindungen (OV) können auch die entsprechenden Mercaptofunktionellen Derivate eingesetzt werden.

Des weiteren können insbesondere auch Isocyanat - funktionelle Fettsäurederivate als Verbindungen (OV) eingesetzt werden. Beispielhaft sei hier das Stearylisocyanat genannt, welches z. B. als Reaktionspartner mit sek. - Aminfunktionellen unmodifizierten Komponenten (D1) eingesetzt werden kann.

In Fällen, in denen eine besonders niedrige Oberflächenspannung der modifizierten Komponente (D1) notwendig ist, werden bevorzugt auch organische Substanzen mit fluorierten Seitenketten, insbesondere fluorierte Kohlenwasserstoffe, eingesetzt. Beispielhaft dafür sind die Methacrylate mit fluorierten Seitenketten genannt, die z.B. im Rahmen von Michael - Additionen mit Aminfunktionellen unmodifizierten Komponenten (D1) umgesetzt werden können, oder 3-Fluorobenzylalkohol als OH - funktionelle Komponente. Des Weiteren können aber auch andere fluorierte Substanzen mit niedriger Oberflächenspannung, die reaktiv gegenüber den entsprechenden Silanen sind, eingesetzt werden.

Für die Reaktion mit Si-H - Gruppen können auch verschiedene ungesättigte Oligomere und Polymere als Verbindung (OV) eingesetzt werden. Besonders bevorzugt werden 1,2 Polybutadiene sowie verschiedene Copolymere der 1,2 Polybutadiene eingesetzt. Des weiteren können Polyisobutylene mit endständigen Doppelbindungen eingesetzt werden. Darüber hinaus können auch oberflächenaktive gepfropfte Polymere oder gepfropfte Copolymere mit ethylenisch ungesättigten Doppelbindungen in den Seitenketten eingesetzt werden.

Des weiteren können als Verbindung (OV) auch Siloxane oder deren Derivate eingesetzt werden.

Geeignet sind prinzipiell alle Polysiloxane, die im Mittel mindestens eine funktionelle Gruppe aufweisen, die mit den komplementären funktionellen Gruppen der unmodifizierten Komponente (D1) reaktiv ist. Insbesondere werden Polysiloxane, die mindestens eine Hydroxyl-, Carboxyl-, Amin- und/oder Thiolgruppe, Vinyl-, Isocyanat- und/oder Epoxygruppe, insbesondere Glycidylgruppe, und/oder Anhydridgruppe und/oder Acryloyl- und Methacryloylgruppe, insbesondere mindestens eine Hydroxyl-, Carboxyl-, Amin- und/oder Thiolgruppe aufweisen, eingesetzt.

Geeignet sind beispielweise Polysiloxane der Formel (I) 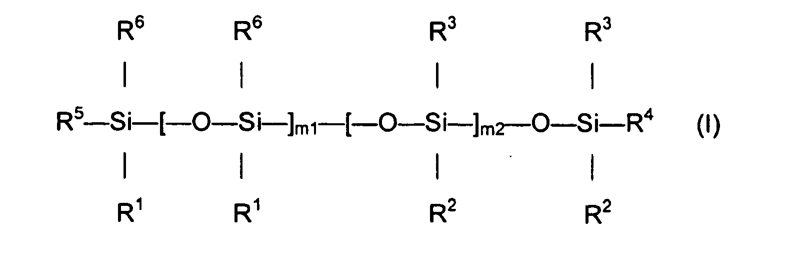 mit
R¹ bis R⁶ gleichen oder verschiedenen Resten,
R¹ = Alkyl-, Cycloalkyl-, Aryl- oder Aralkylrest, wobei die Kohlenstoffkette durch nicht benachbarte Sauerstoff-, Schwefel- oder NRa-Gruppen unterbrochen sein kann, mit Fluor substituierte Alkyl-, Cycloalkyl-, Aryl- oder Aralkylreste, wobei Strukturen, die einen Ethylen-Rest zwischen dem Siliciumatom und dem mit Fluor substituierten organischen Rest aufweisen, bevorzugt sind,
R² = Hydroxy, Alkyl-, Cycloalkyl-, Aryl- oder Aralkylrest, wobei die Kohlenstoffkette durch nicht benachbarte Sauerstoff-, Schwefel- oder NRa-Gruppen unterbrochen sein kann,
R³ und R⁶ = Wasserstoff, Alkyl-, Cycloalkyl-, Aryl- oder Aralkylrest, wobei die Kohlenstoffkette durch nicht benachbarte Sauerstoff-, Schwefel- oder NRa-Gruppen unterbrochen sein kann, mit Fluor substituierte Alkyl-, Cycloalkyl-, Aryl- oder Aralkylreste, wobei Strukturen, die einen Ethylen-Rest zwischen dem Siliciumatom und dem mit Fluor substituierten organischen Rest aufweisen, bevorzugt sind,
R⁴ und R⁵ = Wasserstoff, Hydroxy, Alkyl-, Cycloalkyl-, Aryl- oder Aralkylrest, wobei die Kohlenstoffkette durch nicht benachbarte Sauerstoff-, Schwefel- oder NRa-Gruppen unterbrochen sein kann,
wobei mindestens einer der Reste R², R⁴ und R⁵ zusätzlich eine funktionelle Gruppe trägt, die reaktiv gegenüber der komplementären funktionellen Gruppe der Komponente (D1) ist,
und
m₁ = 1 bis 80, bevorzugt 3 bis 20 und
m₂ = 0 bis 80, bevorzugt 0 bis 10.

Bevorzugt ist dabei die funktionelle Gruppe jeweils ausgewählt aus der Hydroxyl-, Carboxyl-, Amin- und/oder Thiolgruppen, der Vinyl-, Isocyanat- und/oder Epoxygruppen, insbesondere der Glycidylgruppen, und der Anhydridgruppen sowie der Acryloyl- und Methacryloylgruppen.

Durch die Variation des Molekulargewichtes der jeweiligen Siloxanketten kann die Verträglichkeit der resultierenden Komponente (D1) mit den Beschichtungsmitteln gezielt variiert werden. Um eine gute Verträglichkeit mit den Beschichtungsmitteln zu erhalten, werden besonders bevorzugt Siloxane (OV) mit vergleichsweise niedrigem Molekulargewicht eingesetzt. Diese Siloxane sind beispielsweise auch in der Anmeldung US 20040209088, Abschnitt [0017] bis [0019], beschrieben und werden ausdrücklich ebenfalls als bevorzugte Einsatzstoffe erwähnt.

Grundsätzlich kann das Molekulargewicht des als Verbindung (OV) eingesetzten Siloxans je nach der zu erwartenden Verträglichkeit mit den zu modifizierenden Beschichtungsmitteln angepasst werden. Es hat sich jedoch gezeigt, dass in vielen Fällen eher niedrige Molekulargewichte eine gute Verträglichkeit zeigen. Vor diesem Hintergrund werden entsprechend niedrige Molekulargewichte bevorzugt, die sich in den bevorzugten Polymerisationsgraden m₁ und m₁ widerspiegeln.

Hinsichtlich der nicht funktionellen Substituenten an den jeweiligen Siliciumatomen innerhalb der Siloxankette können ebenfalls Variationen, je nach der zu erwartenden Verträglichkeit der Komponenten mit den zu modifizierenden Beschichtungsmitteln durchgeführt werden. Um gezielt die Oberflächenspannung zu erniedrigen und somit die erfindungsgemäßen Komponenten (D1) zu erhalten, werden bevorzugt als nicht - funktionelle Reste Methyl-, Ethyl- und Phenylreste sowie Alkylreste, die zum Teil mit Fluor substituiert sind, eingesetzt. Besonders bevorzugt wird der Methylrest als nicht - funktioneller Rest eingesetzt.

Um die Siloxane gezielt verträglicher zu machen, können als Seitenketten auch Oligomere oder Polymere des Ethylenoxids oder Propylenoxids eingeführt werden.

Bevorzugt werden Polysiloxane der Formel (II) eingesetzt: 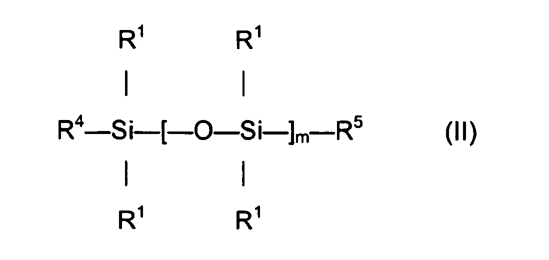 wobei
R¹, R⁴ und R⁵ die vorstehend genannte Bedeutung haben und
m = 1 bis 80, bevorzugt 3 bis 20 und besonders bevorzugt 5 bis 12.

Als oberflächenaktive Verbindung geeignete Siloxane sind beispielsweise auch die in der Patentanmeldung US 20040209088, in den Absätzen [0012] bis [0018] genannten Verbindungen.

Insbesondere werden carbinolfunktionelle Siloxane der oben genannten Formel (II) eingesetzt.

Beispiele für als Verbindung (OV) geeignete Siloxane mit Hydroxylgruppen sind carbinol-terminierte Dimethylsiloxan-caprolacton- Blockcopolymere (kommerziell erhältlich von ABCR GMBH & CO. KG , Karlsruhe unter der Artikel - Nummer AB127698), carbinolfunktionelles Methylsiloxan-dimethylsiloxan-copolymer (kommerziell erhältlich von ABCR GMBH & CO. KG , Karlsruhe unter der Artikel - Nummer AB127701 und AB127700), carbinol-terminiertes Polydimethylsiloxan (kommerziell erhältlich von ABCR GMBH & CO. KG , Karlsruhe unter der Artikel - Nummer AB153380), monocarbinol-terminiertes Polydimethylsiloxane(kommerziell erhältlich von ABCR GMBH & CO. KG , Karlsruhe unter der Artikel - Nummer AB127710 und AB109345 und AB146681 und AB146683 und AB146682), und insbesondere die carbinolfunktionellen Siloxane.

Ganz besonders bevorzugt sind funktionelle Siloxane mit symmetrischer Struktur der nachfolgenden Formel (III): 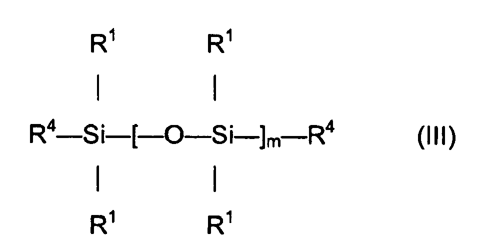 wobei
R¹ und R⁴ die vorstehend genannte Bedeutung haben und Methyl-, Ethyl- und Phenylreste sowie Alkylreste, die zum Teil mit Fluor bzw. der funktionellen Gruppe substituiert sind, bevorzugt sind. Besonders bevorzugt wird der Methylrest als nicht - funktioneller Rest eingesetzt und/oder die funktionelle Gruppe ist bevorzugt eine Hydroxylgruppe.
m = 1 bis 80, bevorzugt 3 bis 20 und besonders bevorzugt 5 bis 12.

Ganz besonders bevorzugt werden Siloxane der Formel (III) eingesetzt, bei denen R⁴ eine Hydroxylgruppe enthält. Bevorzugt wird das carbinolfunktionelle Polysiloxan Baysilone ® OF 502 der GE Bayer Silicones eingesetzt. Das Material ist in verschiedenen Molekulargewichten erhältlich, z. B. Baysilone ® OF 502 6 % und Baysilone ® OF 502 3 %. In diesem Zusammenhang wird das Material Baysilone ® OF 502 6 %, welches ein niedrigeres Molekulargewicht aufweist, bevorzugt.

Des weiteren kommen Siloxane mit primären oder sekundären Amin - Funktionen gemäß der Formeln (II) oder (III) besonders bevorzugt zum Einsatz, wie beispielsweise Aminopropylmethylsiloxane-dimethylsiloxane-Copolymer (kommerziell erhältlich von ABCR GMBH & CO. KG, Karlsruhe unter der Artikel - Nummer AB109374 und AB109373 und AB109375).

### Addukte (A) mit Silanfunktionalität

Bevorzugt enthält die Komponente (D1) als vernetzbare Gruppen hydrolysierbare Silangruppen, insbesondere Alkoxysilangruppen, da diese bei der Vernetzung der Komponente (D1) ein dichtes, hochkratzfestes Si - O - Si - Netzwerk bilden, welches die hervorragenden Eigenschaften der resultierenden Beschichtungen gewährleistet. Diese Komponenten (D1) führen auch zu dem bereits erwähnten Gradienten an Siliciumatomen vom Typ (Si 1) und/oder (Si 2) der zumindest teilweise vernetzten Beschichtung (K) senkrecht zur Oberfläche (KO).

Erfindungsgemäß besonders bevorzugt werden als Komponente (D1) Addukte (A) mit Silanfunktionalität eingesetzt, die herstellbar sind durch eine Additionsreaktion von
(a) mindestens einem Silan (S1), das mindestens eine funktionelle Gruppe aufweist, die mit den komplementären funktionellen Gruppen der Verbindung (OV) reaktiv ist,
   und
(b) mindestens einer Verbindung (OV), die mindestens eine komplementäre funktionelle Gruppe und mindestens einen oberflächenaktiven Rest aufweist.

Unter Additionsreaktion werden nukleophile, elektrophile, pericyclische oder metallkatalysierte Additionsreaktionen verstanden, wie sie u. a. auch mechanistisch in den Lehrbüchern der organischen Chemie, beispielweise Organikum, "Reaktionsmechanismen in der Organischen Chemie", Peter Sykes,VCH - Verlag, im Detail beschrieben sind.

Die Additionsreaktionen zur Herstellung der Addukte (A) mit Silanfunktionalität werden dabei insbesondere zur Umsetzung des Silans (S1) mit der Verbindung (OV) eingesetzt. Es ist aber zusätzlich auch möglich, zunächst die Silane (S1) durch eine entsprechende Additionsreaktion aufzubauen und erst dann die Umsetzung mit der Verbindung (OV) durchzuführen. Bevorzugt ist es, die Silane (S1) in situ durch eine entsprechende Addition aufzubauen, während gleichzeitig die Umsetzung mit der Verbindung (OV) durchgeführt wird.

Die funktionellen Gruppen der Silane (S1) und/oder die funktionellen Gruppen der Verbindung (OV) sind bevorzugt ausgewählt aus der Gruppe der Hydroxyl-, Epoxy-, Isocyanat-, Carbamat-, Carboxyl-, Anhydrid-, Amin-, Thiolgruppen und/oder der ethylenisch ungesättigten Doppelbindungen.

Außerdem ist es bevorzugt, dass die funktionellen Gruppen der Silane und der Verbindung (OV) nicht beide gleichzeitig ethylenisch ungesättigte Doppelbindungen sind, sondern nur eine der beiden Gruppen ist eine ethylenisch ungesättigte Doppelbindung.

Außerdem werden in den erfindungsgemäßen Beschichtungsmitteln bevorzugt Addukte (A) eingesetzt, die im Mittel weniger als 50 mol- % von den Silangruppen, insbesondere von den Alkoxysilangruppen, verschiedene, freie reaktive Gruppen aufweisen.

Beispiele für geeignete Additionsreaktionen zur Herstellung der Addukte (A) mit Silanfunktionalität sind daher insbesondere
(I) Reaktionen von Isocyanatgruppen mit Hydroxylgruppen, von Isocyanatgruppen mit Aminogruppen und von Isocyanatgruppen mit Thiolgruppen,
(II) Reaktionen von Epoxygruppen mit Carboxylgruppen und von Epoxygruppen mit Anhydridgruppen,
(III) Reaktionen von Verbindungen mit aktiven Wasserstoffatomen an ethylenisch ungesättigte Doppelbindungen (sogenannte Michael Additionen), insbesondere Additionen von Aminogruppen an ethylenisch ungesättigte Doppelbindungen
   und
(IV) Metallkatalysierte Addionsreaktionen.

Als Beispiele für Reaktionen der Gruppe (I) seien folgende Umsetzungen genannt:
- Additionen von Isocyanat - funktionellen Verbindungen an Aminosilane,
- Additionen von Isocyanat - funktionellen Verbindungen an Thiol - funktionelle Silane.
- Additionen von Isocyanatosilanen an Hydroxy - funktionelle Verbindungen,
- Additionen von Isocyanatosilanen an Amin - funktionelle Verbindungen und
- Additionen von Isocyanatosilanen an Thiol - funktionelle Verbindungen.

Erfindungsgemäß bevorzugt wird die nukleophile Addition von Amin - funktionellen Silanen oder Thiol - funktionellen Silanen an Isocyanat - funktionelle Oligomere.

Hier und im Folgenden wird dabei unter einem Oligomer eine Verbindung verstanden, welche im Allgemeinen im Mittel 2 bis 10 Grundstrukturen oder Monomereinheiten aufweist. Unter einem Polymeren wird dagegen eine Verbindung verstanden, welche im Allgemeinen im Mittel mehr als 10 Grundstrukturen oder Monomereinheiten aufweist.

Als Beispiele für Reaktionen der Gruppe (II) seien folgende Umsetzungen genannt:
- Additionen von Epoxy - funktionellen Silanen an Carboxy - funktionelle Verbindungen,
- Additionen von Epoxy - funktionellen Silanen an Anhydrid - funktionelle Verbindungen und
- Additionen von Anhydrid - funktionellen Silanen an Epoxy - funktionelle Verbindungen.

Eine ausführliche Beschreibung der Additionsreaktion von Anhydrid - funktionellen Silanen mit Epoxy - funktionellen Verbindungen findet sich in der WO 2006/097387.

Als Beispiele für Reaktionen der Gruppe (III) seien folgende Umsetzungen genannt:
- Additionen von Aminosilanen an Alpha, Beta ungesättigte Verbindungen, z. B. Acryloyl - und Methacryloyl - funktionelle Verbindungen, wie Di(meth)acrylate, u.ä.

Beispielhaft für die Gruppe (IV) der metallkatalysierten Additionsreaktionen sei hier die Hydrosylilierungsreaktion genannt. Im Rahmen einer solchen Hydrosilylierungsreaktion können beispielsweise Silane mit Si-H - Funktionalität an (Poly)Olefine oder an C=C - Doppelbindungen enthaltende Siloxane, wie z. B. Diphenylsiloxan-dimethylsiloxan-Vinyl-terminiertes Copolymer, welches kommerziell bei der ABCR GmbH & Co. KG unter der Artikelnummer AB 116641 erhältlich ist, umgesetzt werden.

Aber auch andere metallkatalysierte Additionsreaktionen, insbesondere Kupplungsreaktionen, können zum Einsatz kommen.

Ganz allgemein können als Silane (S1) Verbindungen mit Si-H Gruppen eingesetzt werden. Diese können im Rahmen einer Hydrosilylierungsreaktion mit den Verbindungen (OV) umgesetzt werden.

Beispielhaft für derartige Silane (S1) mit Si-H Gruppen seien Trichlorsilan, Methyldichlorsilan und Dimethylchlorsilan genannt.

Derartige Verbindungen können mit ungesättigten Verbindungen wie z.B. verschiedenen 1,2 Oligo- oder Polybutadienen oder mit Doppelbindungen enthaltenden Siloxanen, wie z. B. unter Platinkatalyse, zu den entsprechenden Silan - funktionellen Harzen umgesetzt werden. Ggf. können diese Silane (S1) mit Si-H Gruppen im Rahmen einer Umsetzung mit geeigneten Alkoholen, wie z. B. Methanol, zu den entsprechenden Alkoxysilanen umgesetzt werden.

Neben den Silanen mit Si-H - Bindung werden besonders bevorzugt organofunktionelle Silane (S1) eingesetzt. Als organofunktionelle Silane können sowohl Silane mit einem, mit zwei oder mit drei oder mehr hydrolysierbaren Resten eingesetzt werden. Hinsichtlich der Verträglichkeit und der Reaktivität der Silane werden jedoch Silane mit mindestens 3 hydrolysierbaren Resten bevorzugt eingesetzt.

Ganz allgemein können die erfindungsgemäß bevorzugten organofunktionellen Silane (S1) durch die Strukturformel (IV)

R^{s}ₙ-Si-R"ₓX₄₋₍ₙ₊ₓ₎ (IV)

dargestellt werden.

Die Gruppen X, welche identisch oder unterschiedlich sein können, stellen dabei hydrolysierbare Gruppen dar.

Die Gruppen R^{S} stellen organische Reste mit mindestens einer funktionellen Gruppe dar, insbesondere lineare und/oder verzweigte Alkylen- oder Cycloalkylenreste mit 1 bis 20 Kohlenstoffatomen und mit mindestens einer funktionellen Gruppe, ganz besonders Alkylenreste mit 1 bis 4 Kohlenstoffatomen und mit mindestens einer funktionellen Gruppe, R" ist Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen.

In der Strukturformel ist n = 1 bis 3, bevorzugt 1 bis 2, besonders bevorzugt n = 1, x = 0 bis 2, bevorzugt 0 bis 1, besonders bevorzugt x = 0 und 1≤n+x≤3, bevorzugt 1≤n+x≤2, besonders bevorzugt n+x = 1.

Die hydrolysierbaren Gruppen X können ausgewählt werden aus der Gruppe der Halogene, insbesondere Chlor und Brom, aus der Gruppe der Alkoxygruppen, aus der Gruppe der Alkylcarbonylgruppen und aus der Gruppe der Acyloxygruppen. Besonders bevorzugt sind Alkoxygruppen.

Die besonders bevorzugt eingesetzten Alkoxysilane können daher durch die Formel (V)

R^{s}ₙ-Si-R"ₓ(OR)₄₋₍ₙ₊ₓ₎ (V)

dargestellt werden, wobei n = 1 bis 3, bevorzugt n = 1 bis 2 und besonders bevorzugt n = 1 ist, x = 0 bis 2, bevorzugt 0 bis 1, besonders bevorzugt x = 0 und 1≤n+x≤3, bevorzugt 1≤n+x≤2, besonders bevorzugt n+x = 1 ist, und R^{s} und R" die bei Formel (IV) angegebene Bedeutung haben.

Der Rest R kann Wasserstoff, Alkyl oder Cycloalkyl bedeuten, wobei die Kohlenstoffkette durch nicht benachbarte Sauerstoff-, Schwefel- oder NRa- Gruppen unterbrochen sein kann, mit Ra = Alkyl, Cycloalkyl, Aryl oder Aralkyl, bevorzugt R = Alkylrest, insbesondere mit 1 bis 6 C-Atomen.

Die jeweiligen bevorzugten Alkoxyreste können gleich oder verschieden sein, entscheidend für den Aufbau der Reste ist jedoch, inwiefern diese die Reaktivität der hydrolysierbaren Silangruppen beeinflussen. Bevorzugt ist R ein Alkylrest, insbesondere mit 1 bis 6 C-Atomen. Besonders bevorzugt sind Reste R, welche die Reaktivität der Silangruppen erhöhen, d.h. gute Abgangsgruppen darstellen. Insofern ist ein Methoxy - Rest gegenüber einem Ethoxy - Rest und dieser wiederum gegenüber einem Propoxyrest bevorzugt. Besonders bevorzugt ist daher R = Ethyl und/oder Methyl, insbesondere Methyl. Ganz allgemein können jedoch auch weniger reaktive Silane als (S1) eingesetzt werden. In diesen Fällen muss eine ausreichende Vernetzungsdichte entweder durch einen entsprechend effizienteren Katalysator erreicht werden, oder es muss eine entsprechend höhere Menge an Katalysator zugesetzt werden.

Auch nicht funktionellen Substituenten am organofunktionellen Silan (S1), insbesondere Subsituenten am Rest R^{s}, können dessen Reaktivität beeinflussen. Beispielhaft sei dies erläutert am Beispiel von voluminösen, sperrigen Substituenten an der Aminfunktion, welche die Reaktivität von Aminfunktionellen Silanen reduzieren können. Vor diesem Hintergrund ist N-(n-butyl)-3-aminopropyltrimethoxysilan bevorzugt vor N-Cyclohexyl-3-aminopropyltrimethoxysilan.

Ganz allgemein sind die Reste R^{s}, die die Reaktivität der Silane erhöhen, bevorzugt gegenüber Resten, die die Reaktivität der Silane herabsetzen.

Des weiteren kann die Reaktivität von organofunktionellen Silanen auch durch die Länge der Spacer bzw. Reste R^{s1} zwischen Silan - Funktionalität und organischer funktioneller Gruppe erheblich beeinflusst werden. Beispielhaft dafür seien die "alpha" - Silane genannt, die bei der Firma Wacker erhältlich sind, und bei denen eine Methylengruppe anstelle der bei "gamma"-Silane vorhandenen Propylengruppe zwischen Si-Atom und funktioneller Gruppe ist. Zur Verdeutlichung wird angeführt, dass Methacryloxymethyltrimethoxysilan ("alpha" - Silan, z.B. Handelsprodukt GENIOSIL® XL 33 der Firma Wacker) bevorzugt gegenüber Methacryloxypropyltrimethoxysilan ("gamma" - Silan, z.B. Handelsprodukt GENIOSIL® GF 31 der Firma Wacker) eingesetzt wird, um die erfindungsgemäßen Addukte (A) zu synthetisieren.

Ganz allgemein sind Spacer, die die Reaktivität der Silane erhöhen, bevorzugt gegenüber Spacern, die die Reaktivität der Silane herabsetzen. Um eine möglichst hohe Vernetzungsdichte durch eine Silan - Vernetzung zu erreichen, ist es vorteilhaft, möglichst viele Silan - Gruppen in Relation zum Molekulargewicht des einzusetzenden Adduktes zu realisieren. Wenn dies gewährleistet ist und eine besonders hohe Netzwerkdichte im festen Film resultiert, können besonders gute Eigenschaften unter anderem hinsichtlich der Kratzfestigkeit erreicht werden. Vor diesem Hintergrund sind solche organofunktionellen Silane ganz besonders bevorzugt, die es erlauben, quasi ohne nennenswerten Molekulargewichtsaufbau eine besonders hohe Funktionalität im Harz zu realisieren.

Beispielhaft sei dies am Beispiel von zwei Aminfunktionellen Silanen gezeigt: Bis (3-trimethoxysilylpropyl)amin ist bevorzugt vor N-(n-butyl)-3-aminopropyltrimethoxysilan.

Die reaktiven Gruppen der Silane (S1) sind bevorzugt ausgewählt aus der Gruppe der Amin-, Epoxy-, Anhydrid-, Isocyanat-, Carbamat- und/- oder Thiolgruppen und/oder der ethylenisch ungesättigten Doppelbindungen.

Beispielhaft - aber nicht limitierend - werden im folgenden erfindungsgemäß bevorzugte organofunktionelle Silane aufgezählt, die besonders geeignet für die Herstellung der Addukte (A) sind:

### 1) Amin- und Thiol- funktionelle Silane

Zum Einsatz, insbesondere im Rahmen von Michael - Additionen, kommen beispielsweise primäre Aminosilane, wie 3 - Aminopropyltriethoxysilan (erhältlich z.B. unter dem Markennamen Geniosil® GF 93 von der Fa. Wacker Chemie), 3 - Aminopropyltrimethoxysilan (erhältlich z.B. unter dem Markennamen Geniosil® GF 96 von der Fa. Wacker Chemie), N-(2-Aminoethyl)-3-aminopropyltrimethoxysilan (erhältlich z.B. unter dem Markennamen Geniosil® GF 9 sowie Geniosil® GF 91 von der Fa. Wacker Chemie), N-(2-Aminoethyl)-3-aminopropylmethyldimethoxysilan (erhältlich z.B. unter dem Markennamen Geniosil® GF 95 von der Fa. Wacker Chemie) u.ä.

Zum Einsatz, insbesondere im Rahmen von Additionen an Isocyanat - funktionelle Verbindungen, kommen beispielsweise sekundäre Aminosilane und Mercapto - funktionelle Silane, wie beispielsweise Bis-(2-tri-methoxysilylethyl)amin, Bis-(2-triethoxysilylethyl)amin, Bis (3-triethoxysilylpropyl)amin (erhältlich unter dem Handelsnamen Dynasylan® 1122 bei der Firma Degussa), Bis (3-trimethoxysilylpropyl)amin (erhältlich unter dem Handelsnamen Dynasylan® 1124 bei der Firma Degussa), Bis-(4-triethoxysilylbutyl)amin, N-(n-butyl)-3-aminopropyltrimethoxysilan (erhältlich unter dem Handelsnamen Dynasylan® 1189 bei der Firma Degussa), N-(n-butyl)-3-aminopropyltriethoxysilan, N-Cyclohexyl-3-aminopropyltrimethoxysilan (erhältlich unter dem Markennamen Geniosil® GF 92 von der Fa. Wacker Chemie), N-Cyclohexyl-3-aminopropyltriethoxysilan, 3-Mercaptopropyltrimethoxysilan (erhältlich von der Fa. Degussa unter dem Handelsnamen Dynasylan® MTMO), 3-Mercaptopropyltriethoxysilan, N-Cyclohexylaminomethylmethyldiethoxysilan (erhältlich von der Fa. Wacker Chemie unter dem Handelsnamen Geniosil® XL 924), N-Cyclohexylaminomethyltriethoxysilan (erhältlich von der Fa. Wacker Chemie unter dem Handelsnamen Geniosil® XL 926), N-Phenylaminomethyltrimethoxysilan (erhältlich von der Fa. Wacker Chemie unter dem Handelsnamen Geniosil® XL 973) u.ä..

### 2) Epoxy - funktionelle Silane

Epoxy - funktionelle Silane können insbesondere zur Addition an Carbonsäure- oder Anhydrid- funktionelle Verbindungen eingesetzt werden. Beispiele für geeignete Epoxy - funktionelle Silane sind 3-Glycidyloxypropyltrimethoxysilan (erhältlich bei der Fa. Degussa unter dem Handelsnamen Dynasylan® GLYMO), 3-Glycidyloxypropyltriethoxysilan (erhältlich bei der Fa. Degussa unter dem Handelsnamen Dynasylan® GLYEO) u.ä..

### 3) Anhydrid - funktionelle Silane

Anhydrid - funktionelle Silane können insbesondere zur Addition an Epoxy - funktionelle Verbindungen eingesetzt werden. Beispielhaft für ein Silan mit Anhydrid - Funktionalität sei 3-(Triethoxysilyl)propylbernsteinsäureanhydrid (erhältlich von der Fa. Wacker Chemie unter dem Handelsnamen Geniosil® GF 20) genannt.

### 4) Silane mit ethylenisch ungesättigten Doppelbindungen

Derartige Silane können im Rahmen von Michael Reaktionen oder auch im Rahmen von metallkatalysierten Reaktionen eingesetzt werden. Beispielhaft werden 3-Methacryloxypropyltrimethoxysilan (erhältlich z. B. bei der Fa. Degussa unter dem Handelsnamen Dynasilan® MEMO, oder bei der Fa. Wacker Chemie unter dem Handelsnamen Geniosil® GF 31), 3-Methacryloxypropyltriethoxysilan, Vinyltrimethoxysilan (erhältlich u. a. bei der Fa. Wacker Chemie unter dem Handelsnamen Geniosil® XL 10), Vinyldimethoxymethylsilan (erhältlich u. a. bei der Fa. Wacker Chemie unter dem Handelsnamen Geniosil® XL 12), Vinyltriethoxysilan (erhältlich u. a. bei der Fa. Wacker Chemie unter dem Handelsnamen Geniosil® GF 56), (Methacryloxymethyl)methyldimethoxysilan (erhältlich u. a. bei der Fa. Wacker Chemie unter dem Handelsnamen Geniosil® XL 32), Methacryloxymethyltrimethoxysilan (erhältlich u. a. bei der Fa. Wacker Chemie unter dem Handelsnamen Geniosil® XL 33), (Methacryloxymethyl)methyldiethoxysilan (erhältlich u. a. bei der Fa. Wacker Chemie unter dem Handelsnamen Geniosil® XL 34), Methacryloxymethyltriethoxysilan (erhältlich u. a. bei der Fa. Wacker Chemie unter dem Handelsnamen Geniosil® XL 36) genannt.

### 5) Silane mit Isocyanatfunktion oder Carbamatfunktion

Silane mit Isocyanatfunktion oder Carbamatfunktion kommen insbesondere zum Einsatz im Rahmen von Reaktionen mit Hydroxyl-funktionellen Verbindungen. Beispiele für Silane mit Isocyanatfunktion sind beispielsweise in der noch nicht veröffentlichten amerikanischen Patentanmeldung mit der Serial Number 11/227,867 beschrieben.

Geeignete Isocyanatoalkyltrialkoxysilane sind beispielsweise Isocyanatopropyltrimethoxysilan, Isocyanatopropylmethyldimethoxysilan, Isocyanatopropylmethyldiethoxysilan, Isocyanatopropyltriethoxysilan, Isocyanatopropyltriisopropoxysilan, Isocyanatopropylmethydiisopropoxysilan; Isocyanatoneohexyltrimethoxysilan, Isocyanatoneohexyldimethoxysilan, Isocyanatoneohexyldiethoxysilan, Isocyanatoneohexyltriethoxysilan, Isocyanatoneohexyltriisopropoxysilan, Isocyanatoneohexyldiisopropoxysilan, Isocyanatoisoamyltrimethoxysilan, Isocyanatoisoamylmethyldimethoxysilan, Isocyanatoisoamylmethyldiethoxysilan, Isocyanatoisoamyltriethoxysilan, Isocyanatoisoamyltriisopropoxysilan und Isocyanatoisoamylmethyldiisopropoxysilan. Viele Isocyanatoalkyltri- und -di-alkoxysilane sind im Handel beispielsweise unter der Bezeichnung SILQUEST® der Firma OSi Specialties, Inc., einem Unternehmen der Witco Corporation, erhältlich.

Das verwendete Isocyanatopropylalkoxysilan hat bevorzugt einen hohen Reinheitsgrad, insbesondere von mindestens 95%, und ist bevorzugt frei von Additiven, wie Umesterungskatalysatoren, die zu unerwünschten Nebenreaktionen führen können.

Zum Einsatz kommen insbesondere (Isocyanatomethyl)methyldimethoxysilan (erhältlich bei der Fa. Wacker - Chemie unter dem Markennamen Geniosil® XL 42), 3-Isocyanatopropyltrimethoxysilan (erhältlich bei der Fa. Wacker - Chemie unter dem Markennamen Geniosi®I XL 40) und N-Dimethoxy(methyl)silylmethyl-O-methylcarbamat (erhältlich bei der Fa. Wacker - Chemie unter dem Markennamen Geniosil® XL 65).

Als Silankomponente (S1) für die Umsetzung mit der Verbindung (OV) können auch anstelle oder zusammen mit diesen monomeren Silanen, die mindestens eine funktionelle Gruppe aufweisen, Addukte eingesetzt werden, die mindestens eine funktionelle Gruppe und mindestens eine Alkoxysilangruppe aufweisen. Diese als Komponente (S1) geeigneten Addukte sind herstellbar durch eine Additionsreaktion der Silane mit mindestens einer, insbesondere mehr als einer, funktionellen Gruppe und einer Verbindung (V2), die mindestens eine, bevorzugt mindestens zwei komplementäre funktionelle Gruppen G2 aufweist, die mit funktionellen Gruppen des Silans reaktiv sind. Insbesondere werden solche Addukte als Silankomponente (S1) eingesetzt, um die Alkoxyfunktionalität ohne wesentlichen Molekulargewichtsaufbau zu erhöhen. Bevorzugt weisen daher die Verbindungen (V2) ein zahlenmittleres Molekulargewicht unter 1000, insbesondere unter 500 auf.

Bevorzugt ist es, die als Silane (S1) eingesetzten Addukte in situ durch eine entsprechende Addition aufzubauen, während gleichzeitig die Umsetzung mit der oder den Verbindung(en) (OV) durchgeführt wird. Als Additionsreaktion kommen dabei die bereits oben erwähnten Additionsreaktionen in Betracht.

Daneben ist es aber auch denkbar, die Verbindung(en) (OV) zunächst mit einer Verbindung (V1) umzusetzen, die mindestens eine, bevorzugt mindestens zwei komplementäre funktionelle Gruppen aufweist, die mit den funktionellen Gruppen der Verbindung (OV) reaktiv sind. Diese Reaktion kann vor der Umsetzung mit dem Silan (S1) erfolgen. Sie wird aber bevorzugt in situ durchgeführt, d.h. während gleichzeitig die Umsetzung mit dem Silan (S1) erfolgt. Bevorzugt weisen die Verbindungen (V1) ein zahlenmittleres Molekulargewicht unter 1000, insbesondere unter 500 auf.

Eine Option eines solchen "in situ" Verfahrens umfasst die nicht vollständige Umsetzung eines Isocyanates, insbesondere eines Di- oder Polyisocyanates mit einer oder mehreren Verbindungen (OV), die sekundäre Aminogruppen oder Hydroxylgruppen aufweisen. Die verbleibenden Isocyanatgruppen können dann mit geeigneten organofunktionellen Silanen umgesetzt werden. Bevorzugt werden hierzu Silane mit sekundären Aminfunktionen eingesetzt, aber auch alle anderen Silane, die reaktiv gegenüber Isocyanaten sind, können eingesetzt werden.

In den erfindungsgemäßen Beschichtungsmitteln besonders bevorzugt eingesetzte Komponenten (D1) sind erhältlich durch ein "in situ" Verfahren, welches die nicht vollständige Umsetzung eines Isocyanates, insbesondere Di- oder Polyisocyanates, mit einer der oben genannten oberflächenaktiven Verbindung(en), die sekundäre Amingruppen oder Hydroxylgruppen aufweisen, umfasst. Die verbleibenden Isocyanatgruppen können dann mit geeigneten organofunktionellen Silanen umgesetzt werden. Bevorzugt werden hierzu Silane mit sekundären Aminfunktionen eingesetzt, aber auch allen anderen organofunktionellen Silane, die reaktiv gegenüber Isocyanaten sind, können eingesetzt werden.

Ganz besonders bevorzugt werden daher als Komponente (D1) Verbindungen eingesetzt, die mindestens einen reaktiven Rest der Formel (VI) aufweisen:

-N R"'-C(O)-N-(L-SiR"x(OR')3-x)n(L'-SiR"y(OR')3-y)m (VI)

mit
R''' = Wasserstoff, Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl und
R' = Wasserstoff, Alkyl oder Cycloalkyl, wobei die Kohlenstoffkette durch nicht benachbarte Sauerstoff-, Schwefel- oder NRa- Gruppen unterbrochen sein kann, mit Ra = Alkyl, Cycloalkyl, Aryl oder Aralkyl,
L, L' = linearer und/oder verzweigter Alkylen- oder Cycloalkylenrest mit 1 bis 20 Kohlenstoffatomen, insbesondere Alkylenreste mit 1 bis 4 Kohlenstoffatomen, insbesondere L, L' = R^{S1} der Formeln (Si 1) bzw. (Si 2),
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann,
n = 0 bis 2, m = 0 bis 2 und m + n = 2
   sowie
x, y = 0 bis 2.

Diese bevorzugten erfindungsgemäßen Komponenten (D1), die mindestens einen reaktiven Rest der Formel (VI) aufweisen, sind vorzugsweise durch Umsetzung von
- mindestens einem Di- und/oder Polyisocyanat (PI) mit
- mindestens einem Aminosilan der Formel (VII)

   H-N-(L-SiR"x(OR')3-x)n(L'-SiR"y(OR')3-y)m (VII),

   wobei die Substituenten R', L, L', R" und die Indices n, m, x und y die bei der Formel (VI) genannte Bedeutung haben,
   und
- mindestens einer oberflächenaktiven Verbindung (OV)
hergestellt worden.

Besonders bevorzugte Aminosilane (VII) sind Bis(2-ethyltrimethoxysilyl)-amin, Bis(3-propyltrimethoxysilyl)amin, Bis(4-butyltrimethoxysilyl)amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASILAN ® 1124 der Fa. DEGUSSA bzw. Silquest® der Fa. OSI Specialities INC. verfügbar.

Als Di- und/oder Polyisocyanate (PI) für die Herstellung dieser Komponente (D1) sind an sich bekannte substituierte oder unsubstituierte aromatische, aliphatische, cycloaliphatische und/oder heterocyclische Di- und/oder Polyisocyanate geeignet. Beispiele für bevorzugte Di- und/oder Polyisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexane-1,6-diisocyanat, Isophorondiisocyanat, 2-Isocyanatopropylcyclohexylisocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan, 2,4- oder 2,6-Diisocyanato-1-methylcyclohexan, Diisocyanate, abgeleitet von Dimerfettsäuren, wie sie unter der Handelsbezeichnung DDI 1410 von der Firma Henkel vertrieben werden, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat. Perhydrodiphenylmethan-2,4'-diisocyanat, 4,4'-Methylendicyclohexyldiisocyanat (z.B. Desmodur ® W der Fa. Bayer AG), Tetramethylxylyldiisocyanate (z.B. TMXDI® der Fa. American Cyanamid) und Mischungen der vorgenannten Polyisocyanate. Weiterhin bevorzugte Polyisocyanate sind die Biuret-Dimere und die Isocyanurat-Trimere der vorgenannten Diisocyanate.

Besonders bevorzugte Polyisocyanate (PI) sind Hexamethylen-1,6-diisocyanat, Isophorondiisocyanat und 4,4'-Methylendicyclohexyldiisocyanat, deren Biuret-Dimere und/oder Isocyanurat-Trimere.

In einer weiteren Ausführungsform der Erfindung sind die Polyisocyanate (PI) Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4,598,131 beschrieben.

Ganz besonders bevorzugte Komponenten (D1) sind Umsetzungsprodukte von Hexamethylen-1,6-diisocyanat und Isophorondiisocyanat, und/oder deren lsocyanurat-Trimere mit Bis(3-propyltrimethoxysilyl)amin und mindestens einem hydroxylgruppenhaltigen Polysiloxan der oben genannten Formel (III) als oberflächenaktiver Verbindung (OV). Die Umsetzung der Polyisocyanate mit den Aminosilanen erfolgt vorzugsweise in Inertgasatmosphäre bei Temperaturen von maximal 100 °C, bevorzugt von maximal 60 °C.

Bevorzugt sind bei der Umsetzung der Di- und/oder Polyisocyanate mit den Aminosilanen (VII) mindestens 50 mol- %, besonders bevorzugt mindestens 70 mol- %, und maximal 98 mol- %, insbesondere maximal 99 mol-%, der Isocyanatgruppen des Di- und/oder Polyisocyanates (PI) zu Struktureinheiten (VI) umgesetzt. Die restlichen Isocyanatgruppen werden dann mit geeigneten oberflächenaktiven Verbindungen (OV) umgesetzt. Es ist aber auch möglich, zunächst einen Teil des Di- und/oder Polyisocyanates mit geeigneten oberflächenaktiven Verbindungen (OV) umzusetzen und anschließend die Umsetzung mit den Aminosilanen vorzunehmen. Schließlich ist auch eine gleichzeitige Umsetzung aller Verbindungen miteinander möglich ("in situ" - Verfahren).

Die Mengen der Di- und/oder Polyisocyanate und der Aminosilane (VII) und der oberflächenaktiven Verbindung (OV) werden bevorzugt so gewählt, dass die Komponente (D1) im Mittel weniger als 50 mol- % freie Isocyanatgruppen aufweist.

Die oberflächenaktive Verbindung (OV) wird üblicherweise in einer Menge von 0,05 bis 50 Gew.- %, bevorzugt in einer Menge von 0,1 bis 10 Gew.- %, jeweils bezogen auf den Gehalt an eingesetzter Komponente (D1) ohne Lösemittel, eingesetzt.

Die Komponente (D1) wird üblicherweise in solchen Mengen eingesetzt, die ausreichen, um gezielt die Eigenschaften der zumindest teilweise vernetzten Beschichtung zu steuern. Der Anteil der Komponente (D1) an dem erfindungsgemäßen Beschichtungsmittel beträgt bevorzugt von 0,1 bis 35 Gew.- %, besonders bevorzugt von 0,5 bis 15 Gew.- %, ganz besonders bevorzugt von 1 bis 10 Gew.- %, jeweils bezogen auf den Gehalt an nichtflüchtigen Substanzen im Beschichtungsmittel.

### Vernetzbare Komponente (D2)

Als vernetzbare Komponente (D2) können beispielsweise alle üblicherweise in Beschichtungsmitteln eingesetzten filmbildenden Materialien eingesetzt werden. Durch den Zusatz der speziellen oberflächenaktiven Komponente (D1) werden diese Beschichtungsmittel so modifiziert, dass gezielt die Oberflächeneigenschaften der resultierenden Beschichtung eingestellt werden können, wie dies bereits beschrieben wurde.

Als Komponente (D2) können Verbindungen eingesetzt werden, welche mit den vernetzbaren Gruppen der Komponente (D1) und/oder mit sich selbst, gegebenenfalls unter Katalyse, und/oder einem Vernetzungsmittel (VM) Netzwerkpunkte ausbilden können.

Bei der Auswahl der vernetzbaren Komponente (D2) ist bevorzugt zu beachten, dass bei der Härtung der Beschichtungsmittel nicht oder in nur sehr geringem Umfang hydrolyselabile Si-N-C- und/oder Si-O-C-Netzpunkte gebildet werden.

Als Komponente (D2) können daher beispielsweise ein oder mehrere Doppelbindungen aufweisende Oligo- und/oder Polyurethan(meth)-acrylate, Polyester(meth)acrylate, Epoxy(meth)acrylate, (meth)acrylfunktionelle (Meth)Acrylcopolymere, Polyether(meth)acrylate, ungesättigte Polyester, Amino(meth)acrylate, Melamin(meth)acrylate und/- oder Silikon(meth)acrylate, bevorzugt Polyurethan(meth)acrylate und/- oder Polyester(meth)acrylate eingesetzt werden, die ggf. zusätzlich zu den Doppelbindungen auch noch Carbamat-, Biuret-, Allophanat-, Amid-, Harnstoff-, Hydroxyl-, Carboxyl- und/oder Epoxidgruppen aufweisen können.

Die Urethan(meth)acrylate können in dem Fachmann bekannter Weise aus Di- bzw. Polyisocyanaten, mindestens einer Verbindung, die gegenüber Isocyanatgruppen reaktive Gruppen enthält, und mindestens einer Verbindung, die gegenüber Isocyanatgruppen reaktive Gruppen und mindestens eine ethylenisch ungesättigte Gruppe enthält, durch Mischen der Komponenten in beliebiger Reihenfolge, gegebenenfalls bei erhöhter Temperatur, hergestellt werden.

Insbesondere werden die Urethan(meth)acrylate erhalten, indem das Di- oder Polyisocyanat vorgelegt wird und daraufhin mindestens ein Hydroxyalkyl(meth)acrylat oder Hydroxyalkylester anderer ethylenisch ungesättigter Carbonsäuren zugegeben wird, wodurch zunächst ein Teil der Isocyanatgruppen umgesetzt wird. Nachfolgend wird ein Kettenverlängerungsmittel aus der Gruppe der Diole/Polyole und/oder Diamine/Polyamine und/oder Dithiole/Polythiole und/oder Alkanolamine zugegeben und so die restlichen Isocyanatgruppen mit dem Kettenverlängerungsmittel umgesetzt.

Die neben den Urethan(meth)acrylaten geeigneten Polyester(meth)-acrylate sind dem Fachmann prinzipiell bekannt. Sie sind durch verschiedene Methoden herstellbar. Beispielsweise kann Acrylsäure und/- oder Methacrylsäure direkt als Säurekomponente beim Aufbau der Polyester eingesetzt werden. Daneben besteht die Möglichkeit, Hydroxyalkylester der (Meth)Acrylsäure als Alkoholkomponente direkt beim Aufbau der Polyester einzusetzen. Bevorzugt werden die Polyester(meth)-acrylate aber durch Acrylierung von Polyestern hergestellt. Beispielsweise können zunächst hydroxylgruppenhaltige Polyester aufgebaut werden, die dann mit Acryl- oder Methacrylsäure umgesetzt werden. Es können auch zunächst carboxylgruppenhaltige Polyester aufgebaut werden, die dann mit einem Hydroxyalkylester der Acryl- oder Methacrylsäure umgesetzt werden. Nicht umgesetzte (Meth)Acrylsäure kann durch Auswaschen, Destillieren oder bevorzugt durch Umsetzen mit einer äquivalenten Menge einer Mono- oder Diepoxidverbindung unter Verwendung geeigneter Katalysatoren, wie z.B. Triphenylphosphin, aus dem Reaktionsgemisch entfernt werden. Bezüglich weiterer Einzelheiten zur Herstellung der Polyesteracrylate sei insbesondere auf die DE-OS 33 16 593 und die DE-OS 38 36 370 sowie auch auf die EP-A-54 105, die DE-AS 20 03 579 und die EP-B-2866 verwiesen.

Auch die weiterhin geeigneten Polyether(meth)acrylate sind dem Fachmann ebenfalls prinzipiell bekannt. Sie sind durch verschiedene Methoden herstellbar. Beispielsweise können hydroxylgruppenhaltige Polyether, die mit Acrylsäure und/oder Methacrylsäure verestert werden, durch Umsetzung von zwei- und/oder mehrwertigen Alkoholen mit verschiedenen Mengen an Ethylenoxid und/oder Propylenoxid nach gut bekannten Methoden (vgl. z.B. Houben-Weyl, Band XIV, 2, Makromolekulare Stoffe II, (1963)) erhalten werden. Einsetzbar sind auch Polymerisationsprodukte des Tetrahydrofurans oder Butylenoxids.

Ferner sind auch Epoxy(meth)acrylate dem Fachmann wohl bekannt und brauchen daher nicht näher erläutert zu werden. Sie werden üblicherweise hergestellt durch durch Anlagerung von Acrylsäure an Epoxidharze, beispielsweise an Epoxidharze auf Basis Bisphenol A oder andere handelsübliche Epoxidharze.

Insbesondere besteht die vernetzbare Komponente (D2) aus einem oder mehreren Bindemitteln (BM) und ggf. zusätzlich aus einem oder mehreren Vemetzungsmitteln (VM).

Bevorzugt sind die Bindemittel (BM) ausgewählt aus der Gruppe der oligomeren und/oder polymeren Verbindungen, die mittels Strahlung vernetzbare Gruppen, insbesondere ethylenisch ungesättigte Gruppen, wie Acrylat- und/oder Methacrylatgruppen, und/oder thermisch vernetzbare Gruppen, wie Hydroxylgruppen, Carbamatgruppen, Epoxygruppen, Isocyanatgruppen, Carboxyl- und/oder Anhydrid-gruppen, bevorzugt Hydroxylgruppen und/oder Carbamatgruppen und/oder Acrylat- und/oder Methacrylatgruppen, aufweisen und/oder die Vernetzungsmittel (VM) sind ausgewählt aus der Gruppe der Aminoplastharze, unblockierten Di- und/oder Polyisocyanate, blockierten Di- und/oder Polyisocyanate, Polyepoxide, Polycarbonsäuren, Polyanhydride und der Polyole.

Eingesetzt werden insbesondere Bindemittel (BM) auf Basis von Polyurethanen und/oder Poly(meth)acrylaten und/oder Polyestern, die thermisch härtbare Gruppen aufweisen, insbesondere Hydroxyl- und/oder Carbamatgruppen.

Die Bindemittel weisen üblicherweise gelpermeationschromatographisch gegen Polystyrolstandard bestimmte zahlenmittlere Molekulargewichte von 500 bis 20.000, insbesondere von 500 bis 4000 auf.

Bevorzugt beträgt die OH-Zahl der OH-Gruppen enthaltenden Bindemittel zwischen 50 und 500 mgKOH/g, insbesondere zwischen 70 und 250 mgKOH/g, jeweils bestimmt nach der DIN EN ISO 4629, Ausgabe 07.1998.

Carbamatgruppen enthaltende Bindemittel weisen üblicherweise ein rechnerisches Carbamatäquivalentgewicht CEW von 250 bis 700 g/Äquivalent, insbesondere von 250 bis 500 g/Äquivalent, auf.

Als Bindemittel (BM) werden beispielsweise (Meth)Acrylatcopolymerisate eingesetzt, die erhältlich sind, indem
(a1) 10 bis 80 Gew.- %, bevorzugt 20 bis 60 Gew.- %, 3-Hydroxypropylacrylat oder 3-Hydroxypropylmethacrylat oder 2-Hydroxypropylacrylat oder 2-Hydroxypropylmethacrylat oder 2-Hydroxyethylacrylat oder 2-Hydroxyethylmethacrylat oder 4-Hydroxy-n-butylacrylat oder 4-Hydroxy-n-butylmethacrylat oder Mischungen dieser Monomeren,
(b1) 0 bis 30 Gew.- %, bevorzugt 0 bis 15 Gew.- % eines von (a1) verschiedenen hydroxylgruppenhaltigen Esters der Acrylsäure oder eines hydroxylgruppenhaltigen Esters der Methacrylsäure oder eines Gemisches aus solchen Monomeren,
(c1) 0 bis 90 Gew.- %, bevorzugt 10 bis 70 Gew.- %, eines von (a1) und (b1) verschiedenen aliphatischen oder cycloaliphatischen Esters der (Meth)acrylsäure mit mindestens 4 Kohlenstoffatomen im Alkoholrest oder eines Gemisches aus solchen Monomeren,
(d1) 0 bis 3 Gew. -%, bevorzugt 0 bis 2 Gew. -%, einer ethylenisch ungesättigten Carbonsäure oder einer Mischung aus ethylenisch ungesättigten Carbonsäuren und
(e1) 0 bis 50 Gew.- %, bevorzugt 0 bis 35 Gew.- %, eines Vinylaromaten und/oder eines von (a1), (b1), (c1) und (d1) verschiedenen ethylenisch ungesättigten Monomeren oder eines Gemisches aus solchen Monomeren
copolymerisiert werden, wobei die Summe der Gewichtsanteile der Komponenten (a1), (b1), (c1), (d1) und (e1) stets 100 Gew.- % ergibt.

Die Vernetzungsmittel (VM) sind insbesondere ausgewählt aus der Gruppe der Aminoplastharze, unblockierten Polyisocyanate, blockierten Polyisocyanate, Polyepoxide, Polycarbonsäuren, Polyanhydride und der Polyole.

Es kommen die üblichen und bekannten Aminoplastharze in Betracht, deren Methylol- und/oder Methoxymethylgruppen z. T. mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Geeignete Vernetzungsmittel (VM) sind auch Epoxyharze, welche bevorzugt mit sich selbst unter der Katalyse der Komponente (C) reagieren, besonders bevorzugt aliphatische Epoxyharze, welche eine hohe Witterungsstabilität aufweisen. Solche Epoxyharze sind beispielsweise in der Monographie von B.Ellis "Chemistry and Technology of Epoxy Resins" (Blackie Academic & Professional, 1993, Seiten 1 bis 35) beschrieben.

Bevorzugt werden als Vernetzungsmittel (VM) Di- und/oder Polyisocyanate eingesetzt. Beispiele für geeignete Di- und/oder Polyisocyanate sind die oben bereits bei der Komponente (D1) beschriebenen Di- und/- oder Polyisocyanate. Bevorzugt werden aliphatische und/oder cycloaliphatische Di- und/oder Polyisocyanate eingesetzt.

Bei Einsatz der Isocyanate in 1 K-Lacken werden die Isocyanate in dem Fachmann bekannter Weise mit einem Blockierungsmittel umgesetzt, wobei sich die Auswahl des Blockierungsmittels insbesondere nach der gewünschten Härtungstemperatur richtet, wie dies dem Fachmann bekannt ist.

In der Regel wird die Komponente (D2) in Anteilen von 50 bis 99,8 Gew.- %, bevorzugt von 80 bis 99,4 Gew.- %, besonders bevorzugt von 85 bis 98,5 Gew.- %, bezogen auf die nichtflüchtigen Bestandteile des Beschichtungsmittels, eingesetzt.

Die Bindemittel (BM) werden üblicherweise in Anteilen von 1 bis 70 Gew.- %, bevorzugt von 10 bis 50 Gew.- %, besonders bevorzugt von 20 bis zu 45 Gew.- %, bezogen auf die nichtflüchtigen Bestandteile des Beschichtungsmittels, eingesetzt.

Die Vernetzungsmittel (VM) werden üblicherweise in Anteilen von 1 bis 70 Gew.- %, bevorzugt von 10 bis 60 Gew.- %, besonders bevorzugt von 25 bis zu 55 Gew.- %, bezogen auf die nichtflüchtigen Bestandteile des Beschichtungsmittels, eingesetzt.

### Weitere Bestandteile des Beschichtungsmittels (B)

Die Beschichtungsmittel (B) enthalten bevorzugt zusätzlich einen oder mehrere Katalysatoren (C) für die Vernetzung der reaktiven Gruppen der Komponente (D1), insbesondere für die Vernetzung der Silangruppen.

Grundsätzlich können als Katalysatoren (C) für die Vernetzung der Silangruppen bzw. der Alkoxysilangruppen an sich bekannte Verbindungen eingesetzt werden. Beispiele sind Lewis-Säuren (Elektronenmangelverbindungen), wie beispielsweise Zinnnaphtenat, Zinnbenzoat, Zinnoctoat, Zinnbutyrat, Dibutylzinndilaurat, Dibutylzinndiacetat, Dibutylzinnoxid und Bleioctoat. Diese sind jedoch hinsichtlich ihrer Toxizität bedenklich. Insbesondere, wenn wirksame Mengen für die Silanvernetzung eingesetzt werden sollen, neigen derartige Katalysatoren zur Vergilbung, insbesondere beim "Überbrennen", d. h. der Vernetzung bei höherer Temperatur, z. B. bei 160 °C. Eine derartige Überbrennstabilität ist jedoch eine Voraussetzung für den Einsatz von OEM Klarlacken in der Serienproduktion. Andere toxikologisch weniger bedenkliche Katalysatoren sind Metallkomplexe mit Chelatliganden auf der Basis von Aluminium oder auch Zink, wie beispielsweise die in WO-A-2006/042585, Seite 10, Zeilen 4 bis 21 beschriebenen Katalysatoren. Auch diese Katalysatoren neigen zu starker Vergilbung beim Überbrennen und sollen daher in den erfindungsgemäßen Formulierungen möglichst nicht eingesetzt werden.

Hinsichtlich der toxikologischen Eigenschaften und der Vergilbung bei Überbrennprüfungen sind Katalysatoren, die auf Derivaten von Phosphor - haltigen Säuren basieren, erfindungsgemäß bevorzugt.

Als Katalysator (C) werden daher insbesondere substituierte Phosphonsäurediester und Diphosphonsäurediester, vorzugsweise aus der Gruppe, bestehend aus acyclischen Phosphonsäurediestern, cyclischen Phosphonsäurediestern, acyclischen Diphosphonsäurediestem und cyclischen Diphosphonsäurediestern, sowie substituierte Phosphorsäuremonoester und Phosphorsäurediester, vorzugsweise aus der Gruppe, bestehend aus acyclischen Phosphorsäurediestern und cyclischen Phosphorsäurediestern, oder die entsprechenden aminblockierten Ester eingesetzt. Geeignete phosphorhaltige Katalysatoren sind beispielsweise in der noch nicht veröffentlichten deutschen Patentanmeldung DE P102005045228.0-44 beschrieben.

Bevorzugt werden als Katalysator (C) entsprechend substituierte Phosphorsäuremonoester und Phosphorsäurediester, vorzugsweise aus der Gruppe, bestehend aus acyclischen Phosphorsäurediestern und cyclischen Phosphorsäurediestern, eingesetzt.

Dabei werden die acyclischen Phosphonsäurediester (C) insbesondere aus der Gruppe, bestehend aus acyclischen Phosphonsäurediestern (C) der allgemeinen Formel (VIII):

R¹⁰-O

P(O)H (VIII);

R¹¹-O

ausgewählt, wobei die Reste R¹⁰ und R¹¹ gleich oder voneinander verschieden sind; vorzugsweise sind sie gleich.

Die Reste R¹⁰ und R¹¹ werden aus der Gruppe, bestehend aus:
- substituiertem und unsubstituiertem Alkyl- mit 1 bis 20, vorzugsweise 2 bis 16 und insbesondere 2 bis 10 Kohlenstoffatomen, Cycloalkyl- mit 3 bis 20, vorzugsweise 3 bis 16 und insbesondere 3 bis 10 Kohlenstoffatomen und Aryl- mit 5 bis 20, vorzugsweise 6 bis 14 und insbesondere 6 bis 10 Kohlenstoffatomen,
- substituiertem und unsubstituiertem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und Cycloalkylarylalkyl-, wobei die hierin enthalten Alkyl-, Cycloalkyl- und Arylgruppen jeweils die vorstehend aufgeführte Anzahl von Kohlenstoffatomen enthalten und
- substituiertem und unsubstituiertem Rest- der vorstehend aufgeführten Art, enthaltend mindestens ein, insbesondere ein, Heteroatom, ausgewählt aus der Gruppe bestehend aus Sauerstoffatom, Schwefelatom, Stickstoffatom, Phosphoratom und Siliziumatom, insbesondere Sauerstoffatom, Schwefelatom und Stickstoffatom
ausgewählt.

Bevorzugt werden die acyclischen Phosphonsäurediester (C) der allgemeinen Formel (VIII) verwendet, insbesondere solche, bei denen die Reste R¹⁰ und R¹¹ der allgemeinen Formel (VIII) aus der Gruppe, bestehend aus Phenyl, Methyl und Ethyl, ausgewählt sind. Ein Beispiel für einen gut geeigneten Phosphonsäurediester (C) der allgemeinen Formel (VIII) ist Diphenylphosphonat, das manchmal von der Fachwelt (nicht ganz korrekt) auch als Diphenylphosphit bezeichnet wird.

Besonders bevorzugt werden als Katalysator (C) entsprechend substituierte Phosphorsäuremonoester und Phosphorsäurediester, vorzugsweise aus der Gruppe, bestehend aus acyclischen Phosphorsäurediestern und cyclischen Phosphorsäurediestern, eingesetzt.

Dabei werden die acyclischen Phosphorsäuremono- und -diester (C) insbesondere aus der Gruppe, bestehend aus acyclischen Phosphorsäuremono- und -diestern (C) der allgemeinen Formel (IX):

R¹⁰-O

P(O)OH (IX);

R¹¹-O

ausgewählt, wobei R¹⁰ und R¹¹ die oben angegebene Bedeutung haben und zusätzlich auch Wasserstoff darstellen können (Teilversterung). Beispiele für ganz besonders gut geeignete Phosphorsäureester (C) sind die entsprechenden aminblockierten Phosphorsäureester, und hier insbesondere aminblockierter Phosphorsäureethylhexylester und aminblockierter Phosphorsäurephenylester.

Hinsichtlich des Amins, mit welchem die Phosphorsäureester blockiert werden, ist Triethylamin besonders bevorzugt. Bestimmte, mit Amin blockierte Phosphorsäurekatalysatoren sind auch kommerziell erhältlich. Beispielsweise sei der unter der Bezeichnung Nacure 4167 von der Firma King Industries als besonders geeigneter Katalysator auf der Basis eines Amin - blockierten Phosphorsäureteilesters genannt.

Der Katalysator (C) wird üblicherweise in Anteilen von 0,1 bis 15 Gew.-%, bevorzugt von 0,5 bis 5 Gew.- %, bezogen auf die nichtflüchtigen Bestandteile des Beschichtungsmittels, eingesetzt.

Außerdem enthalten die Beschichtungsmittel üblicherweise noch Lösemittel (L). Insbesondere sind aprotische Lösemittel geeignet, die im Beschichtungsmittel chemisch inert gegenüber den übrigen Komponenten sind und die auch bei der Härtung des Beschichtungsmittels nicht reagieren. Beispiele für solche Lösemittel sind aliphatische und/- oder aromatische Kohlenwasserstoffe wie Toluol, Xylol, Solventnaphtha®, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel auf.

Die erfindungsgemäßen Beschichtungsmittel können außerdem übliche Hilfs- und Zusatzstoffe, wie beispielsweise Katalysatoren für die Vernetzung der Komponenten (D1) und (D2), Entschäumer, Haftvermittler, Additive zur Verbesserung der Untergrundbenetzung, Additive zur Verbesserung der Oberflächenglätte, Mattierungsmittel, Lichtschutzmittel, vorzugsweise UV-Absorber und/oder HALS, Korrosionsinhibitoren, Biozide, Flammschutzmittel oder Polymerisationsinhibitoren, wie sie in dem Buch "Lackadditive" von Johan Bielemann, Wiley-VCH, Weinheim, New York, 1998, im Detail beschrieben werden, in üblichen Mengen, insbesondere in Mengen von bis zu 5 Gew.- %, bezogen auf das Gesamtgewicht des Beschichtungsmittels, enthalten.

Besonders bevorzugte Beschichtungsmittel werden erhalten, wenn der Gehalt an anderen, nicht vernetzenden oberflächenaktiven Substanzen, also an oberflächenaktiven Substanzen ausgenommen die Komponente (D1), möglichst niedrig gehalten wird. Insbesondere liegt der Gehalt an diesen anderen, nicht vernetzenden oberflächenaktiven Substanzen unter 0,5 Gew.- % und besonders bevorzugt unter 0,1 Gew.- %, jeweils bezogen auf das Gesamtgewicht des Beschichtungsmittels. Beispiele für solche anderen, nicht vernetzenden oberflächenaktiven Substanzen sind insbesondere übliche Verlaufsadditive u.ä..

### Effekt- und/oder farbgebende Mehrschichtlackierungen

Die erfindungsgemäßen Beschichtungsmittel eignen sich hervorragend als dekorative, schützende und/oder effektgebende, hoch kratzfeste Beschichtungen und Lackierungen, insbesondere als transparente Beschichtung einer effekt- und/oder farbgebenden Mehrschichtlackierung, von Karosserien von Fortbewegungsmitteln oder von Teilen hiervon (insbesondere Kraftfahrzeuge, wie Motorräder, Busse oder PKW, Nutzfahrzeuge, wie landwirtschaftliche Maschinen und LKW, sowie Flugzeugbau und Schiffbau, Karosserie-innen- und -außenbauteilen) im Bereich der Serien- und Reparaturlackierung; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Insbesondere werden die erfindungsgemäßen Beschichtungsmittel und Lackierungen, insbesondere die Klarlackierungen, in dem technologisch und ästhetisch besonders anspruchsvollen Gebiet der Automobilserienlackierung (OEM) eingesetzt. Besonders bevorzugt werden die erfindungsgemäßen Beschichtungsmittel in mehrstufigen Beschichtungsverfahren eingesetzt, insbesondere bei Verfahren, bei dem auf ein gegebenenfalls vorbeschichtetes Substrat mindestens ein pigmentiertes Beschichtungsmittel und danach auf mindestens einen Teil der so erhaltenen pigmentierten Beschichtung ein transparentes Beschichtungsmittel aufgebracht und gehärtet wird, wobei die transparente Besichtung aus den erfindungsgemäßen Beschichtungsmitteln hergestellt wird.

Dieses Verfahren wird insbesondere in der Automobilserien- und/oder Nutzfahrzeug- und/oder Reparaturlackierung, zur Beschichtung von Karosserie-innen- oder -Aussenbauteilen oder von Bauteilen für den Schiff- und Flugzeugbau oder von Bauteilen für Haushalts- und Elektrogeräte oder von Kunststoffformteilen oder Folien eingesetzt.

Bevorzugt sind so auch Mehrschichtlackierungen aus mindestens einer pigmentierten Beschichtung und einer darauf angeordneten transparenten Beschichtung, wobei die transparente Beschichtung aus dem erfindungsgemäßen Beschichtungsmittel hergestellt worden ist.

Die hierbei eingesetzten pigmentierten Beschichtungen können unter Verwendung sowohl wässriger als auch lösemittelhaltiger pigmentierter Beschichtungsmittel hergestellt worden sein, die im Allgemeinen physikalisch oder thermisch und/oder mit aktinischer Strahlung härtbar sind.

Die pigmentierten Beschichtungsmittel enthalten üblicherweise
(I) ein oder mehrere Lösemittel und/oder Wasser
(II) ein oder mehrere Bindemittel, bevorzugt ein oder mehrere Polyurethanharze und/oder Acrylatharze und/oder Polyesterharze, besonders bevorzugt mindestens ein Polyurethanharz,
(III) ggf. mindestens ein Vernetzungsmittel,
(IV) ein oder mehrere Pigmente, insbesondere effekt- und/oder farbgebende Pigmente sowie
(V) ggf. ein oder mehrere übliche Hilfs- und Zusatzstoffe.

Als Bindemittel geeignet sind dabei die in Basislacken im Bereich der Automobilindustrie üblicherweise eingesetzten Polyurethanharze, Acrylatharze und Polyesterharze, wobei in dem Fachmann bekannter Weise über die Auswahl der Art und Menge der zur Herstellung dieser Bindemittel eingesetzten Aufbaukomponenten die Eigenschaften und damit die Eignung der Bindemittel für das erfindungsgemäße Verfahren gesteuert wird.

Bevorzugt eingesetzt werden Polyurethanharze, ggf. in Kombination mit einem oder mehreren Polyacrylatharzen und/oder mit einem oder mehreren Polyesterharzen.

Geeignete pigmentierte Beschichtungsmittel (Basislacke) sind beispielsweise in der EP-A-0 692 007 und in den dort in Spalte 3, Zeilen 50ff., angeführten Dokumenten beschrieben.

Die Applikation der erfindungsgemäßen Beschichtungsmittel kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Es kann aber auch das zu beschichtende Substrat, insbesondere ein Coil, bewegt werden, wobei die Applikationsanlage relativ zum Substrat ruht oder in geeigneter Weise bewegt wird. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Im Falle strahlenhärtbarer filmbildender Materialien erfolgt die Härtung in dem Fachmann bekannter Weise mittels Strahlung, insbesondere mittels UV-Strahlung. Bevorzugt wird eine Strahlendosis von 100 bis 6.000, vorzugsweise 200 bis 3.000, bevorzugt 300 bis 2.500 und besonders bevorzugt 500 bis 2.000 mJcm⁻² eingesetzt. Die Bestrahlung kann unter einer sauerstoffabgereicherten Atmosphäre durchgeführt werden. "Sauerstoffabgereichert" bedeutet, dass der Gehalt der Atmosphäre an Sauerstoff geringer ist als der Sauerstoffgehalt von Luft (20,95 Vol.- %). Die Atmosphäre kann im Grunde auch sauerstofffrei sein, d. h., es handelt sich um ein Inertgas. Wegen der fehlenden inhibierenden Wirkung von Sauerstoff kann dies aber eine starke Beschleunigung der Strahlenhärtung bewirken, wodurch Inhomogenitäten und Spannungen entstehen können. Es ist daher von Vorteil, den Sauerstoffgehalt der Atmosphäre nicht auf Null Vol.- % abzusenken.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung). Vorteilhafterweise erfolgt die thermische Härtung bei einer Temperatur von 50 bis 200°C, besonders bevorzugt 60 bis 190°C und insbesondere 80 bis 180°C während einer Zeit von 1 min bis zu 5 h, besonders bevorzugt 2 min bis zu 2 h und insbesondere 3 min bis 90 min.

Die erfindungsgemäßen Beschichtungsmittel liefern neue gehärtete Beschichtungen, insbesondere Lackierungen, speziell Klarlackierungen, Formteile, speziell optische Formteile, und freitragende Folien, die hoch kratzfest und insbesondere chemikalien- und witterungsstabil sind. Insbesondere lassen sich die erfindungsgemäßen Beschichtungen und Lackierungen, speziell die Klarlackierungen, auch in Schichtdicken > 40 µm herstellen, ohne dass Spannungsrisse auftreten.

### Verfahren zur Steuerung der Eigenschaften einer Beschichtung

Darüber hinaus wird erfindungsgemäß auch ein Verfahren zur Steuerung der Eigenschaften von zumindest teilweise vernetzten Beschichtungen (K) zur Verfügung gestellt, bei dem die Beschichtung (K) aufgebaut ist aus einer oberflächennahen Beschichtungszone (K1) und einer Volumenbeschichtungs-Zone (K2) und die Beschichtung (K) hergestellt wird aus einem Beschichtungsmittel, welches mindestens zwei unterschiedliche Komponenten (D1) und (D2) enthält, wobei zumindest ein Teil der Komponente (D1) eine oder mehrere oberflächenaktive Struktureinheiten (O) aufweist; dadurch gekennzeichnet, dass
(i) die Vernetzungsdichte des aus der Komponente (D1) gebildeten Netzwerkes (N1) höher ist als die Vernetzungsdichte des aus der Komponente (D2) gebildeten Netzwerkes (N2) und
(ii) über das Verhältnis der Vernetzungsdichte des aus der Komponente (D1) gebildeten Netzwerkes (N1) zu der Vernetzungsdichte des aus der Komponente (D2) gebildeten Netzwerkes (N2) die Eigenschaften der Beschichtung gesteuert werden.

Wie bereits oben ausgeführt, wird die oberflächennahe Beschichtungszone (K1) im Wesentlichen durch die zumindest teilweise vernetze Komponente (D1) und die Volumenbeschichtungs-Zone (K2) im Wesentlichen durch die zumindest teilweise vernetze Komponente (D2) gebildet.

### Bestimmung der Eigenschaften der Beschichtung (K)

Die erfindungsgemäßen gehärteten Beschichtungen, insbesondere Lackierungen, speziell Klarlackierungen sind hoch kratzfest und insbesondere chemikalien- und witterungsstabil. Insbesondere lassen sich die erfindungsgemäßen Beschichtungen und Lackierungen, speziell die Klarlackierungen, auch in Schichtdicken > 40 µm herstellen, ohne dass Spannungsrisse auftreten.

So zeichnen sich die gehärteten erfindungsgemäßen Beschichtungen und hierbei bevorzugt die entsprechenden transparenten Beschichtungen einer effekt- und/oder farbgebenden Mehrschichtlackierung, durch eine sehr gute Mikroeindringhärte aus. Bevorzugt weisen die gehärteten Beschichtungen dabei eine Mikroeindringhärte von mindestens 90 N/mm², insbesondere von mindestens 100 N/mm² und ganz besonders bevorzugt von mindestens 110 N/mm², auf. Die Mikroeindringhärte wird dabei an Beschichtungen gemessen, die eine Trockenfilmschichtdicke von 40 µm aufweisen und die 22 min bei 140 °C getrocknet und vor Messung der Mikroeindringhärte 5 Tage bei 25 °C gelagert wurden. Die Mikroeindringhärte wurde entsprechend der DIN EN ISO 14577 mit Hilfe des Fisherscope Messgerätes der Firma Fischer mit einer maximalen Kraft von 25,6 mN bestimmt.

Insbesondere zeichnen sich die gehärteten erfindungsgemäßen Beschichtungen durch eine verbesserte Trockenkratzbeständigkeit aus. Die Trockenkratzbeständigkeit wurde mit Hilfe des Crockmeter - Tests (9 µm Papierkörnung) bestimmt. Dazu wurde in Anlehnung an EN ISO 105 - X 12 verfahren und der Glanzverlust bei 20° nach 10 Doppelhüben ausgewertet. Die erfindungsgemäßen Beschichtungsmittel eignen sich daher auch zur Kratzfestausrüstung von exponierten Stellen von lackierten Automobilkarosserien.

Die chemischen Oberflächeneigenschaften, insbesondere der Gradient der chemischen Uneinheitlichkeit, werden via Photoelektronenspektroskopie (XPS), wobei die Informationstiefe zum Nachweis des Gradienten via Austrittswinkelvariation oder Sputtertiefenprofilanalyse variiert wurde, und mit Hilfe der Transmissionselektronenmikroskopie zusammen mit EDX (energiedispersive Röntgenspektroskopie) bestimmt.

Alle XPS-Messungen erfolgten an einem small-spot-Spektrometer der Fa. Physical Electronics mit der Modellbezeichnung PHI 5600 LS. Zur Erzeugung der Röntgenstrahlung wurde immer die Mg-Röhre eingesetzt (1253,6 keV). Der Nachweis der Photoelektronen bei einer Pass-Energie von 23,5 eV nutzte folgende Bindungsniveaus zur Bestimmung der Atomkonzentrationen: bei Si das 2p-, bei O das 1 s- und ebenso beim C das 1 s-Niveau. Durch Variation des Detektionswinkels der Photoelektronen - das ist der Winkel zwischen der Probenoberfläche und der Achse der Elektronenlinsen vor dem Elektronenspektrometer - wurde die Tiefe, in der die Messsignale generiert werden (Informationstiefe), verändert: Bei 5° ist die Informationstiefe ca. 1,2 nm (XPS(Si)1,2nm), bei 45° ca. 10 nm (XPS(Si)10nm). Bei dem Detektionswinkel von 45° hat die Messfläche eine Durchmesser von 800 µm, bei 5° ist er entsprechend elliptisch vergrößert. Nach Anfertigung von Dünnschnitten mit einem Mikrotom parallel zur Oberfläche und ca. 10 µm unterhalb der Oberfläche lässt sich ein Referenzwert vergleichsweise tief im Material erfassen (XPS(Si)10µm).

Zur Charakterisierung der Ergebnisse der Photoelektronenspektroskopie wird im weiteren folgende Nomenklatur verwendet:

*XPS(Si)1,2nm* steht für den Anteil der nachgewiesenen Atome (in diesem Fall Silicium) aus einer Informationstiefe von 1,2nm gemessen ab der Lackoberfläche. Die Gesamtheit der in der angegebenen Informationstiefe per XPS nachweisbaren Atomspezies wird dabei als 100% angegeben. Wie der Fachmann weiß, ist z.B. Wasserstoff per XPS nicht nachweisbar.

Zur Präparation der Dünnschnitte wurde von Stahltafeln mit einem entsprechenden Komplettaufbau ausgegangen. Zum Präparieren der Mikrotomschnitte wurde ein motorisiertes, handelsübliches Rotationsmikrotom vom Typ RM 2155, erhältlich bei der Firma Leica Mikrosysteme, Bensheim, verwendet. Vor dem Schneiden wurde zunächst die gewünschte Schichtdicke eingestellt. Anschließend wurden die jeweiligen Bleche fixiert. Im eigentlichen Arbeitsgang wurde das Rotationsmikrotom über die jeweiligen Bleche gefahren. Die so erhaltenen Dünnschnitte wurden für die weiteren Untersuchungen herangezogen.

Die physikalisch mechanischen Eigenschaften können auch orts- und tiefenaufgelöst mittels Nanoindentation bestimmt werden, beispielsweise mit dem Nanoindentations-Gerät Tribolndenter® von der Fa. Hysitron Inc.. Die Versuchsdurchführung des Tests passiert hierbei wie folgt: Als Eindruckkörper wird eine dreiseitigen Diamantpyramide in Berkovich Geometrie (Öffnungswinkel 142,3°) mit einem möglichst punktförmigen Spitze (Radius < 100nm) verwendet. Dieser Körper wird nun für 10 s mit linear steigender Kraft bis zu einer Maximalkraft von 5 mN in die Beschichtungsoberfläche gedrückt, wobei die Eindringtiefe zwischen 1 µm und 1,5 µm beträgt, verweilt dort weitere 30 s bei maximaler Kraft und wird während der nächsten 10 s mit linear fallender Kraft aus der Oberfläche zurückgezogen. Aus der resultierenden Datensatz Kraft über Eindringtiefe werden nach dem bekannten Algorithmus nach *Oliver und Pharr* (vgl. W. C. Oliver, G. M. Pharr, Journal of Materials Research. 7 (1992), 1565, G. M. Pharr, Materials Science and Engineering A 253 (1998), 151) die mechanischen Daten des untersuchten Materials ortsaufgelöst bestimmt.

### Beispiele

### 1.1. Herstellung eines Adduktes (AV1)

In einem Reaktionsgefäß, ausgerüstet mit Rührer, Rückflusskühler, Ölheizung und Stickstoffeinleitungsrohr, wurden 456,38 Gewichtsteile eines handelsüblichen Isocyanurates von Hexamethylendiisocyanat (Desmodur N 3600 der Firma Bayer AG) vorgelegt. Zu dieser Anlösung des Isocyanurates wurden langsam unter Rühren 815,62 Gewichtsteile N,N-Bis(3-trimethoxysilylpropan-1-yl)amin (Dynasilan® 1124 der Firma Degussa) gegeben. Anschließend wurde noch zwei Stunden bei 55°C gerührt. Hiernach waren IR - spektroskopisch keine freien Isocyanatgruppen mehr nachweisbar. Die so erhaltene Verbindung (AV1) wies einen Festkörpergehalt von 79 % auf.

### 1.2. Herstellung eines oberflächenmodifizierten Adduktes (A1)

In einem Reaktionsgefäß, ausgerüstet mit Rührer, Rückflusskühler, Ölheizung und Stickstoffeinleitungsrohr, wurden 100 Gewichtsteile eines handelsüblichen Isocyanurates von Hexamethylendiisocyanat (Desmodur N 3600 der Firma Bayer AG) vorgelegt. Zu dieser Anlösung des Isocyanurates wurden langsam unter Rühren eine Lösung von 15 Gewichtsteilen eines carbinol - funktionellen Siloxans (Baysilone® OF 502 6% der Firma GE - Bayer Silicone) in 3,75 Gewichtsteilen des handelsüblichen, aromatischen Lösungsmittels Solventnaphta® zugegeben. Nach erfolgter Zugabe wurde das Reaktionsgemisch auf 55°C erhitzt und noch während 2 Stunden bei 55°C gerührt. Darauf wurden langsam und unter Rühren 172,5 Gewichtsteile N,N-Bis(3-trimethoxysilylpropan-1-yl)amin (Dynasilan® 1124 der Firma Degussa) zu dem Gemisch gegeben. Anschließend wurde noch zwei Stunden bei 55°C gerührt. Hiernach waren IR-spektroskopisch keine freien Isocyanatgruppen mehr nachweisbar. Die so erhaltene Verbindung (A1) wies einen Festkörpergehalt von 80,8 % auf. Die Oberflächenspannung der eingesetzten Edukte und des Adduktes A1 wurde mit Hilfe der Ringmethode bestimmt. Die resultierenden Ergebnisse sind in der folgenden Tabelle zusammengestellt:.

| Substanz | Oberflächenspannung σ / [mN/m] |
|---|---|
| N,N-Bis(3-trimethoxysilylpropan-1-yl)amin (Dynasilan® 1124) | 30,3 |
| Baysilone® OF 502 6% (GE - Bayer Silicones) | 21,7 |
| Desmodur N 3600 (Bayer AG) | 43,2 |
| Addukt A1 | 26,5 |

### 1.3. Herstellung eines Katalysators (C1) auf Basis eines aminblockierten Phosphorsäureesters

In einem Reaktor, ausgestattet mit einem Tropftrichter und einem Rückflußkühler wurden 43,2 Gewichtsteile Phosphorsäurephenylester und 39,2 Gewichtsteile Methoxypropylacetat vorgelegt und homogenisiert. Anschließend wurden so langsam unter Kühlung und Rühren 17,6 Gewichtsteile Triethylamin zugetropft, dass die Temperatur 60°C nicht überstieg. Nach erfolgter Zugabe des Triethylamins wurde das Reaktionsgemisch noch 2 Stunden bei Raumtemperatur gerührt. Das resultierende Reaktionsprodukt wies einen Festkörpergehalt von 50,0 % auf.

### 1.4. Herstellung eines hydroxylgruppenhaltigen Polyacrylates (PAC 1)

In einem Reaktor, der mit Stickstoff gespült wurde und auf dem ein Kühler angebracht ist, werden 30,4 Gewichtsteile Solventnaphta® vorgelegt und unter Rühren auf 140°C aufgeheizt. Parallel dazu wurden zwei separate Zuläufe prepariert. Zulauf 1 bestand aus 13,9 Gewichtsteilen Styrol, 26,7 Gewichtsteilen Butylacrylat, 15,0 Gewichtsteilen Hydroxyethylacrylat, und 1,4 Gewichtsteilen Acrylsäure. Zulauf 2 bestand aus 5,9 Gewichtsteilen Solventnaphta® und 1,30 Gewichtsteilen Peroxid DTBP (= Di-tert.-Butylperoxid). Nachdem die Temperatur von 140°C erreicht war, wurde Zulauf 2 langsam und gleichmäßig über einen Zeitraum von 285 Minuten zudosiert. 15 Minuten nach dem Start von Zulauf 2 wurde Zulauf 1 langsam und gleichmäßig über einen Zeitraum von 240 Minuten in den Reaktor dosiert. Nach Ende der Dosierung von Zulauf 2 wurde das Reaktionsgemisch zur Nachpolymerisation noch 120 Minuten bei 140°C gerührt. Der Festkörpergehalt des so erhaltenen Produktes wurde zu 60 %, die Säurezahl zu 19 mg KOH / g und die OH-Zahl zu 128 mg KOH / g (jeweils bezogen auf den Festkörper) und die Viskosität zu 9,5 dPa·s bei 23 °C bestimmt.

### 1.5. Herstellung eines Rheologiehilfsmittels auf Acrylatbasis

In 32,02 Gewichtsteilen Solventnaphta® wird aus 25,67 Gewichtsteilen Styrol, 22,30 Gewichtsteilen n - Butylacrylat, 13,87 Gewichtsteilen 2-Hydroxyethylacrylat, 1,41 Gewichtsteilen ethacrylsäure, 0,870 Gewichtsteilen Laurylmethacrylat (MA - 13, erhältlich bei der Fa. Degussa) wird ein Methacrylatcopolymerisat hergestellt.

Aus 84,7 Gewichtsteile des so erhaltenen Methacrylatcopolymerisates, 5,88 Gewichtsteilen Butylacetat, 2,24 Gewichtsteilen Benzylamin und 1,76 Gewichtsteilen Hexamethylendiisocyanat, gelöst in 3,42 Gewichtsteilen Butylacetat, wird ein harnstoffmodifiziertes Rheologiehilfsmittel auf Acrylatbasis hergestellt, das einen Festkörper von 59 % aufwies.

### 2. Herstellung der 1-Komponenten Klarlacke 1 bis 6

Die in Tabelle 1 aufgeführten Rohstoffe wurden zur Herstellung der 1 K Klarlacke in den angegebenen Mengen nacheinander zusammengegeben und homogenisiert.

**Tabelle 1. Zusammensetzung der 1 K Klarlacke der Vergleichsbeispiele V1, V2, V3 und V4 sowie der erfindungsgemäßen Beispiele 1 und 2**

| Inhaltsstoff [Gew.- teile] | Beispiel V1 | Beispiel 1 | Beispiel V2 | Beispiel V3 | Beispiel 2 | Beispiel V4 |
|---|---|---|---|---|---|---|
| Acrylatharz PAC1 gemäß 1.4. | 25,8 | 25,8 | 25,8 | 25,8 | 25,8 | 25,8 |
| Luwipal 018 BX 1) | 25,3 | 25,3 | 25,3 | 25,3 | 25,3 | 25,3 |
| Addukt (A1) gemäß 1.2. | 0 | 5,0 | 0 | 0 | 5,0 | 0 |
| Addukt (AV1) gemäß 1.1. | 0 | 0 | 5,00 | 0 | 0 | 5,00 |
| Desmodur PL 350 ²⁾ | 7,6 | 0 | 0 | 7,6 | 0 | 0 |
| Rheologiehilfsmittel gemäß 1.5. | 21 | 21 | 21 | 21 | 21 | 21 |
| Lösungsmittelgemisch ³⁾ | 0 | 1,9 | 1,9 | 0 | 1,9 | 1,9 |
| Xylol | 1,185 | 1,185 | 1,185 | 1,185 | 1,185 | 1,185 |
| Solventnaphta® | 7,9 | 7,9 | 7,9 | 7,9 | 7,9 | 7,9 |
| Byk 310 ⁴⁾ | 0 | 0 | 0 | 0,1 | 0,1 | 0,1 |
| Baysilon OL 17 ⁵⁾ | 0 | 0 | 0 | 0,015 | 0,015 | 0,015 |
| Tinuvin 5941-R ⁶⁾ | 0,85 | 0,85 | 0,85 | 0,85 | 0,85 | 0,85 |
| Tinuvin 292 ⁷⁾ | 0,05 | 0,05 | 0,05 | 0,05 | 0,05 | 0,05 |
| Solvesso 150 ⁸⁾ | 6,7 | 6,7 | 6,7 | 6,7 | 6,7 | 6,7 |
| Butylglykoldiacetat | 1 | 1 | 1 | 1 | 1 | 1 |
| Katalysator (C1) gemäß 1.3. | 0 | 1 | 1 | 0 | 1 | 1 |
| Nacure 4167 ⁹⁾ | 0,5 | 0,5 | 0,5 | 0,5 | 0,5 | 0,5 |
| Butanol | 2 | 2 | 2 | 2 | 2 | 2 |
| Verlaufsmittel ¹⁰⁾ | 0,7 | 0,7 | 0,7 | 0,7 | 0,7 | 0,7 |

| | | | | | | |
|---|---|---|---|---|---|---|
| Erläuterungen zu Tabelle 1 ¹⁾ : Luwipal 018 BX = handelsübliches, mit Butanol teilverethertes Melamin-Formaldehydharz der Firma BASF AG, 64 - 68%ig in n-Butanol/Xylol 2:1 ²⁾ : Desmodur PL 350 = handelsübliches, aliphatisches, blockiertes Isocyanat der Firma Bayer, 75%ig in 1-Methoxypropylacetat-2/ Solventnaphta® 11/14 ³⁾ : Lösemittelgemisch bestehend aus 1-Methoxypropylacetat-2 und Solventnaphta® im Verhältnis 11 :14 ⁴⁾ : Byk® 310 = handelsübliches Verlaufsadditiv auf Basis einer 25%igen Lösung in Xylol eines polyestermodifizierten Polydimethylsiloxans der Firma Byk-Chemie GmbH, Wesel ⁵⁾ : Baysilon OL 17 = handelsübliches Verlaufsadditiv der Firma Borchers GmbH ⁶⁾ : Tinuvin® 5941 - R = handelsübliche Mischung verschiedener Lichtschutzmittel der Firma Ciba Speciality Chemicals Inc. ⁷⁾ : Tinuvin® 292 = handelsübliches Lichtschutzmittel auf Basis sterisch gehinderter Amine ("HALS") der Firma Ciba Speciality Chemicals Inc. ⁸⁾ : Solvesso 150 = handelsübliches Lösemittelgemisch ⁹⁾ : Nacure 4167 = handelsüblicher Katalysator der Firma King Industries auf der Basis eines Amin - blockierten Phosphorsäureteilesters ¹⁰⁾ : Verlaufsmittel auf Acrylatbasis mit einem Festkörpergehalt von 65 %, einer Säurezahl von 3 mg KOH / g (bezogen auf den Festkörper) und einer Viskosität bei 23 °C von 3 dPa·s | | | | | | |

### 3. Herstellung der Beschichtungen

Die einzelnen 1 K Klarlacke gemäß Tabelle 1 wurden auf Prüfbleche appliziert, die jeweils mit einer üblichen und bekannten, kathodisch abgeschiedenen, thermisch gehärteten Elektrotauchlackierung, einer üblichen und bekannten, thermisch gehärteten Füllerlackierung und einer während 10 Minuten bei 80°C vorgetrockneten Schicht aus einem handelsüblichen, konventionellen, schwarzen Basislack der Firma BASF Coatings AG beschichtet worden waren, appliziert. Die Basislackschicht und die Klarlackschicht wurden gemeinsam während 22 Minuten bei 140°C gehärtet. Die resultierende Basislackierung wies eine Schichtdicke von 7,5 µm und die Klarlackierung eine Schichtdicke von 40 µm auf.

### 4. Untersuchung der Eigenschaften der resultierenden Beschichtungen

Alle Oberflächen waren hochglänzend und zeigten eine hervorragende Appearance. Auf den resultierenden Oberflächen wurde die Trockenkratzbeständigkeit mit Hilfe des Crockmeter - Tests (9 µm Papierkörnung) bestimmt. Dazu wurde in Anlehnung an EN ISO 105 - X 12 verfahren und der Glanzverlust bei 20° nach 10 Doppelhüben ausgewertet. Außerdem wurde die Pendeldämpfung nach König mit dem Modell 299/300 der Firma Erichsen GmbH & Co KG, Hemer - Sundwig untersucht. Angegeben ist die Anzahl der Schwingungen. Die Mikroeindringhärte wurde entsprechend der DIN 55676 mit Hilfe des Fisherscope Messgerätes der Firma Helmut Fischer GmbH & Co mit einer maximalen Kraft von 25,6 mN bestimmt. Die Ergebnisse sind in Tabelle 2 dargestellt.

**Tabelle 2: Messergebnisse des Crockmetertestes, der Mikroeindringhärte und der Pendeldämpfung nach König (Anzahl der Schwingungen)**

| Test | Klarlack Beispiel V1 | Klarlack Beispiel 1 | Klarlack Beispiel V2 | Klarlack Beispiel V3 | Klarlack Beispiel 2 | Klarlack Beispiel V4 |
|---|---|---|---|---|---|---|
| Mikroeindringhärte [N/mm²] | 98 | 125 | 121 | 112 | 120 | 117 |
| Pendeldämpfung nach König | 58 | 67 | 61 | 59 | 70 | 64 |
| Restglanz nach Crockmeter Test [%] | 23 % | 90 % | 47 % | 59 % | 87 % | 68 % |

Die Ergebnisse zeigen, dass insbesondere die Trockenkratzfestigkeit durch den Zusatz des oberflächenmodifizierten Adduktes (A1) zusammen mit dem Katalysator (C) deutlich erhöht wird (Beispiel 1). Falls dagegen das nicht oberflächenmodifizierte Addukt (AV1) eingesetzt wird (Beispiel V2), ist die Verbesserung insbesondere der Trockenkratzfestigkeit deutlich geringer ausgeprägt. Das Beispiel V3 zeigt, dass auch andere oberflächenaktive Substanzen, wie z.B. handelsübliche Verlaufsmittel zu einer Verbesserung der Eigenschaften führen, die aber wesentlich geringer ausgeprägt sind als bei Zusatz des oberflächenmodifizierten Adduktes (A1). Nur, wenn das Addukt (A) grenzflächenaktive Strukturen (O) aufweist, kann sich an der Oberfläche eine Gradientenstruktur mit einem dichten hochkratzfesten Si - O - Si - Netzwerk bilden, welches die hervorragenden Eigenschaften an der Oberfläche ausbildet. Der Nachweis einer solchen Gradientenstruktur gelingt beispielsweise mit der Röntgenphotoelektronenspektroskopie und mit Hilfe der Transmissionselektronenmikroskopie zusammen mit EDX (energiedispersive Röntgenspektroskopie).

Die physikalisch mechanischen Eigenschaften können auch orts- und tiefenaufgelöst mittels Nanoindentation bestimmt werden, beispielsweise mit dem Nanoindentations-Gerät Tribolndenter® von der Fa. Hysitron Inc.. Die Versuchsdurchführung des Tests passiert hierbei wie folgt: Als Eindruckkörper wird eine dreiseitigen Diamantpyramide in Berkovich Geometrie (Öffnungswinkel 142,3°) mit einem möglichst punktförmigen Spitze (Radius < 100nm) verwendet. Dieser Körper wird nun für 10 s mit linear steigender Kraft bis zu einer Maximalkraft von 5 mN in die Beschichtungsoberfläche gedrückt, wobei die Eindringtiefe zwischen 1 µm und 1,5 µm beträgt, verweilt dort weitere 30 s bei maximaler Kraft und wird während der nächsten 10 s mit linear fallender Kraft aus der Oberfläche zurückgezogen. Aus der resultierenden Datensatz Kraft über Eindringtiefe werden nach dem bekannten Algorithmus nach *Oliver und Pharr* (vgl. W. C. Oliver, G. M. Pharr, Journal of Materials Research. 7 (1992), 1565, G. M. Pharr, Materials Science and Engineering A 253 (1998), 151) die mechanischen Daten des untersuchten Materials ortsaufgelöst bestimmt.

Zur Verdeutlichung des Einflusses des Katalysators (C) wurden die Klarlacke des Beispiels 1 (= Vergleichsbeispiel V5) und des Vergleichsbeispiels V2 (= Vergleichsbeispiels V6) unter Weglassen des Katalysators (C1) wiederholt und analog zu dem Beispiel 1 bzw. V2 die Beschichtungen V5 und V6 hergestellt und die Mikroeindringhärte sowie die Trockenkratzbeständigkeit mit Hilfe des Crockmeter - Tests bestimmt. Die Ergebnisse sind in Tabelle 3 aufgeführt. Die Ergebnisse zeigen, dass die Mikroeindringhärte und die Kratzfestigkeit der Beschichtungen ohne Katalysator (C) deutlich niedriger ausfallen als in den entsprechenden Beispielen mit Katalysator.

**Tabelle 3: Messergebnisse der Vergleichsbeispiels V5 und V6**

| Test | Klarlack Beispiel 1 | Klarlack Beispiel V5 | Klarlack Beispiel V2 | Klarlack Beispiel 6 |
|---|---|---|---|---|
| Mikroeindringhärte [N/mm²] | 125 | 98 | 121 | 100 |
| Restglanz nach Crockmeter Test [%] | 90 % | 73 % | 47 % | 30 % |

Außerdem wurden die Beschichtungen der Beispiele 1 und 2 sowie der Vergleichsbeispiele V1 bis V4 mittels der ARXPS (= winkelabhängige Photoelektronenspektroskopie) untersucht. Die Ergebnisse sind in Tabelle 4 dargestellt. Die Informationstiefe zum Nachweis des Gradienten wurde via Austrittswinkelvariation oder Sputtertiefenprofilanalyse variiert.

Alle XPS-Messungen erfolgten an einem small-spot-Spektrometer der Fa. Physical Electronics mit der Modellbezeichnung PHI 5600 LS . Zur Erzeugung der Röntgenstrahlung wurde immer die Mg-Röhre eingesetzt (1253,6 keV). Der Nachweis der Photoelektronen bei einer Pass-Energie von 23,5 eV nutzte folgende Bindungsniveaus zur Bestimmung der Atomkonzentrationen: bei Si das 2p-, bei O das 1 s- und ebenso beim C das 1 s-Niveau. Durch Variation des Detektionswinkels der Photoelektronen - das ist der Winkel zwischen der Probenoberfläche und der
Achse der Elektronenlinsen vor dem Elektronenspektrometer - wurde die Tiefe in der die Messsignale generiert werden (Informationstiefe) verändert: Bei 5° ist die Informationstiefe ca. 1,2 nm (XPS(Si)1,2nm), bei 45° ca. 10 nm (XPS(Si)10nm). Bei dem Detektionswinkel von 45° hat die Messfläche eine Durchmesser von 800 µm, bei 5° ist er entsprechend elliptisch vergrößert. Nach Anfertigung von Schnitten mit einem Mikrotom parallel zur Oberfläche und ca. 10 µm unterhalb der Oberfläche lässt sich ein Referenzwert vergleichsweise tief im Material erfassen (XPS(Si)10*µ*m).

**Tabelle 4: Ergebnisse der ARXPS (= winkelabhängige Photoelektronenspektroskopie) Messungen**

| Messwert | Klarlack Beispiel V1 | Klarlack Beispiel 1 | Klarlack Beispiel V2 | Klarlack Beispiel V3 | Klarlack Beispiel 2 | Klarlack Beispiel V4 |
|---|---|---|---|---|---|---|
| Si (XPS, 1,2 nm) | 1,3% | 11,8% | 1,6% | 12,0% | 15,2% | 12,3% |
| Si (XPS, 10 nm) | 0,4% | 5,7% | 1,5% | 5,5% | 8,2% | 5,6% |
| Si(XPS) 10µm | < 0,2% | 1,4% | 1,5% | 0,1 % | 0,9% | 0,5% |
| O (XPS, 1,2 nm) | 13% | 19,5% | 17,4% | 20,9% | 22,1% | 21,3% |
| X_{OF} - Xᵥₒₗ | 1,2% | 10,0% | <0,1 % | 11,9% | 14,3% | 11,8% |
| XPS(Si 1,2nm) / XPS(Si 10µm | 6,5 | 8,4 | 1 | 120 | 16,9 | 24,6 |
| XPS(Si) / XPS(O) | 0,1 | 0,6 | 0,09 | 0,57 | 0,69 | 0,58 |
| XPS(Si 1,2nm) / XPS(Si 10nm | 3,25 | 2,07 | 1,07 | 2,18 | 1,85 | 2,20 |
| tau | 0,007µm | 0,01µm | Kein Gradient | 0,01µm | 0,01µm | 0,01µm |

Zur Charakterisierung der XPS-Ergebnisse wird im weiteren folgende Nomenklatur verwendet:

***XPS(Si)1,2nm*** steht für den Anteil der nachgewiesenen Atome (in diesem Fall Silicium) aus einer Informationstiefe von 1,2nm gemessen ab der Lackoberfläche. Die Gesamtheit der in der angegebenen Informationstiefe per XPS nachweisbaren Atomspezies wird dabei als 100% angegeben. Wie der Fachmann weiß, ist z.B. Wasserstoff per XPS nicht nachweisbar.

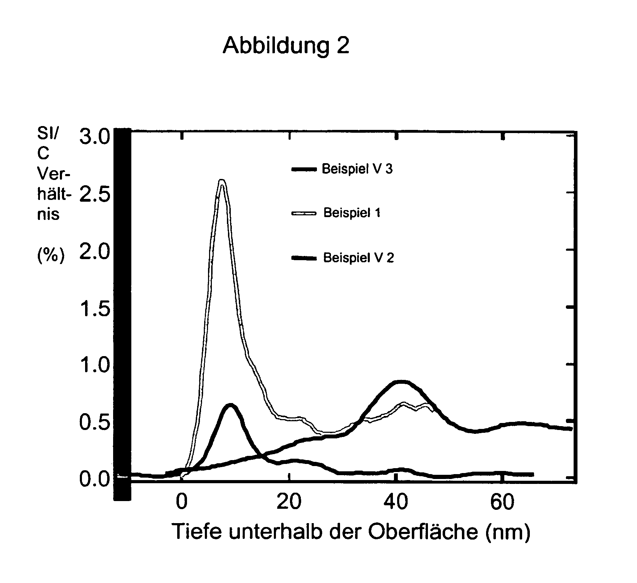

Schließlich wurden die Beschichtungen des Beispiels 1 und der Vergleichsbeispiele V2 und V3 mit Hilfe der Transmissionselektronenmikroskopie zusammen mit EDX (energiedispersive Röntgenspektroskopie) untersucht. Die Ergebnisse sind in Abbildung 2 dargestellt. Angegeben sind in Abbildung 2 die Atomverhältnisse Si / C für die Beschichtungen des Beispiels 1 und der Vergleichsbeispiele V2 und V3. Die Abbildung 2 verdeutlicht die Anreicherung des oberflächenmodifizierten Adduktes (A1), während das nichtoberflächenmodifizierte Addukt (AV1) nur eine sehr geringe Anreicherung in der oberflächennahen Zone zeigt.

### 5.1. Herstellung eines oberflächenmodifizierten Adduktes (A2)

In einem Reaktionsgefäß, ausgerüstet mit Rührer, Rückflusskühler, Ölheizung und Stickstoffeinleitungsrohr, wurden 100 Gewichtsteile eines handelsüblichen Isocyanurates von Hexamethylendiisocyanat (Desmodur® N 3600 der Firma Bayer AG) vorgelegt. Zu dieser Anlösung des Isocyanurates wurden langsam unter Rühren eine Lösung von 2,5 Gewichtsteilen eines carbinol - funktionellen Siloxans (Baysilone® OF 502 6% der Firma GE - Bayer Silicone) in 0,625 Gewichtsteilen des handelsüblichen, aromatischen Lösungsmittels Solventnaphta® zugegeben. Nach erfolgter Zugabe wurde das Reaktionsgemisch auf 55°C erhitzt und noch während 2 Stunden bei 55°C gerührt. Darauf wurden langsam und unter Rühren 184 Gewichtsteile N,N-Bis(3-trimethoxysilylpropan-1-yl)amin (Dynasilan® 1124 der Firma Degussa) zu dem Gemisch gegeben. Anschließend wurde noch zwei Stunden bei 55°C gerührt. Hiernach waren IR-spektroskopisch keine freien Isocyanatgruppen mehr nachweisbar. Die so erhaltene Verbindung (A2) wies eine Festkörpergehalt von 89 % auf. Die Oberflächenspannung der so erhaltenen Verbindung (A2) wurde mit der Ringmethode zu 27,0 mN / m bestimmt.

### 5.2. Herstellung eines oberflächenmodifizierten Adduktes (A3)

In einem Reaktionsgefäß, ausgerüstet mit Rührer, Rückflusskühler, Ölheizung und Stickstoffeinleitungsrohr, wurden 100 Gewichtsteile eines handelsüblichen Isocyanurates von Hexamethylendiisocyanat (Desmodur® N 3600 der Firma Bayer AG) vorgelegt. Zu dieser Anlösung des Isocyanurates wurden langsam unter Rühren eine Lösung von 5 Gewichtsteilen des carbinol - funktionellen Siloxans (Baysilone® OF 502 6% der Firma GE - Bayer Silicone) in 1,25 Gewichtsteilen des handelsüblichen, aromatischen Lösungsmittels Solventnaphta® zugegeben. Nach erfolgter Zugabe wurde das Reaktionsgemisch auf 55°C erhitzt und noch während 2 Stunden bei 55°C gerührt. Darauf wurden langsam und unter Rühren 181 Gewichtsteile N,N-Bis(3-trimethoxysilylpropan-1-yl)amin (Dynasilan® 1124 der Firma Degussa) zu dem Gemisch gegeben. Anschließend wurde noch zwei Stunden bei 55°C gerührt. Hiernach waren IR-spektroskopisch keine freien Isocyanatgruppen mehr nachweisbar. Die so erhaltene Verbindung (A3) wies eine Festkörpergehalt von 90 % auf. Die Oberflächenspannung der so erhaltenen Verbindung (A3) wurde mit der Ringmethode zu 26,5 mN / m bestimmt.

### 5.3. Herstellung eines oberflächenmodifizierten Adduktes (A4)

In einem Reaktionsgefäß, ausgerüstet mit Rührer, Rückflusskühler, Ölheizung und Stickstoffeinleitungsrohr, wurden 100 Gewichtsteile eines handelsüblichen Isocyanurates von Hexamethylendiisocyanat (Desmodur® N 3600 der Firma Bayer AG) vorgelegt. Zu dieser Anlösung des Isocyanurates wurden langsam unter Rühren eine Lösung von 10 Gewichtsteilen des carbinol - funktionellen Siloxans (Baysilone® OF 502 6% der Firma GE - Bayer Silicone) in 2,5 Gewichtsteilen eines handelsüblichen, aromatischen Lösungsmittels Solventnaphta® zugegeben. Nach erfolgter Zugabe wurde das Reaktionsgemisch auf 55°C erhitzt und noch während 2 Stunden bei 55°C gerührt. Darauf wurden langsam und unter Rühren 175 Gewichtsteile N,N-Bis(3-trimethoxysilylpropan-1-yl)amin (Dynasilan® 1124 der Firma Degussa) zu dem Gemisch gegeben. Anschließend wurde noch zwei Stunden bei 55°C gerührt. Hiernach waren IR-spektroskopisch keine freien Isocyanatgruppen mehr nachweisbar. Die so erhaltene Verbindung (A4) wies eine Festkörpergehalt von 91 % auf. Die Oberflächenspannung der so erhaltenen Verbindung (A4) wurde mit der Ringmethode zu 26,5 mN / m bestimmt.

### 5.4. Herstellung eines hydroxylgruppenhaltigen Polyacrylates (PAC 2)

In einem Reaktor, der mit Stickstoff gespült wurde und auf dem ein Kühler angebracht ist, werden 17,5 Gewichtsteile Pentylacetat vorgelegt und unter Rühren auf 140°C aufgeheizt. Parallel dazu wurden zwei separate Zuläufe prepariert. Zulauf 1 bestand aus 28,58 Gewichtsteilen 2-Hydroxypropylmethacrylat, 11,93 Gewichtsteilen Cyclohexylmethacrylat, 14,44 Gewichtsteilen Ethylhexylmethacrylat, 6,88 Gewichtsteilen Ethylhexylacrylat und 0,15 Gewichtsteilen Acrylsäure. Zulauf 2 bestand aus 2,945 Gewichtsteilen Solventnaphta® und 8,06 Gewichtsteilen Peroxid TBPEH(= tert.- Butylhydroperoxid). Nachdem die Temperatur von 140°C erreicht war, wurde Zulauf 2 langsam und gleichmäßig über einen Zeitraum von 285 Minuten zudosiert. 15 Minuten nach dem Start von Zulauf 2 wurde Zulauf 1 langsam und gleichmäßig über einen Zeitraum von 240 Minuten in den Reaktor dosiert. Nach Ende der Dosierung von Zulauf 2 wurde das Reaktionsgemisch zur Nachpolymerisation noch 120 Minuten bei 140°C gerührt. Der Festkörpergehalt des so erhaltenen Produktes wurde zu 65 %, die Säurezahl zu 5-7 mg KOH / g (bezogen auf den Festkörper), die OH-Zahl zu 180 mgKOH/g und die Viskosität bei 23°C zu 19,5 dPa·s bestimmt.

### 5.5. Herstellung eines Katalysators (C2) auf Basis eines aminblockierten Phosphorsäureesters

In einem Reaktor, ausgestattet mit einem Tropftrichter und einem Rückflußkühler wurden 32,4 Gewichtsteile Phosphorsäureethylhexylester und 50 Gewichtsteile Methoxypropylacetat vorgelegt und homogenisiert. Anschließend wurden so langsam unter Kühlung und Rühren 17,6 Gewichtsteile Triethylamin zugetropft, dass die Temperatur 60°C nicht überstieg. Nach erfolgter Zugabe des Triethylamins wurde das Reaktionsgemisch noch 2 Stunden bei Raumtemperatur gerührt. Das resul tierende Reaktionsprodukt wies einen Festkörpergehalt von 50,0 % auf.

### 6. Herstellung der 2-Komponenten-Klarlacke

Die in Tabelle 5 aufgeführten Rohstoffe wurden zur Herstellung des Stammlackes in den angegebenen Mengen nacheinander zusammengegeben und homogenisiert.

Erläuterungen zu Tabelle 5:
Tinuvin® 5941 - R = handelsübliche Mischung verschiedener Lichtschutzmittel der Firma Ciba Speciality Chemicals Inc. Tinuvin® 292 = handelsübliches Lichtschutzmittel auf Basis sterisch gehinderter Amine ("HALS") der Firma Ciba Speciality Chemicals Inc. Byk® 320 = handelsübliches Verlaufsadditiv auf Basis einer 52-%igen Lösung eines polyethermodifizierten Polymethylalkylsiloxans der Firma Byk-Chemie GmbH, Wesel
Byk® 306 = handelsübliches Verlaufsadditiv auf Basis einer 12,5-%igen Lösung eines polyethermodifizierten Polydimethylsiloxans in Xylol/Monophenylglykol 7/2 der Firma Byk-Chemie GmbH, Wesel

**Tabelle 5: Zusammensetzung der 2-Komponenten Klarlacke der Beispiele 3 bis 5 und des Vergleichsbeispiels V7**

| Inhaltsstoff [Gew.-teile] | Beispiel V7 | Beispiel 3 | Beispiel 4 | Beispiel 5 |
|---|---|---|---|---|
| Polyacrylat (PAC2) gemäß 6.4. | 73,5 | 73,5 | 73,5 | 73,5 |
| Butyldiglykolacetat | 8,5 | 8,5 | 8,5 | 8,5 |
| Butanol | 0,15 | 0,15 | 0,15 | 0,15 |
| Tinuvin 5941-R ¹⁾ | 1,86 | 1,86 | 1,86 | 1,86 |
| Tinuvin 292 ²⁾ | 0,24 | 0,24 | 0,24 | 0,24 |
| Byk® 320 ³⁾ | 0,15 | 0,15 | 0,15 | 0,15 |
| Byk® 306 ⁴⁾ | 0,20 | 0,20 | 0,20 | 0,20 |
| Solventnaphta® | 3 | 3 | 3 | 3 |
| Butylacetat | 3,63 | 3,63 | 3,63 | 3,63 |
| Ethoxypropylacetat | 4,77 | 4,77 | 4,77 | 4,77 |
| Butylglykolacetat | 4 | 4 | 4 | 4 |
| Katalysator (C2) gemäß 5.5. | 0 | 2 | 2 | 2 |
| Addukt (A2) gemäß 5.1. | 0 | 30 | 0 | 0 |
| Addukt (A3) gemäß 5.2. | 0 | 0 | 30 | 0 |
| Addukt (A4) gemäß 5.3. | 0 | 0 | 0 | 30 |

Unmittelbar vor der Applikation wurden zu 100 Gewichtsteilen Stammlack noch 33 Gewichtsteile Härter gegeben und die so erhaltene Mischung homogenisiert. Der eingesetzte Härter wurde hergestellt, indem die in Tabelle 6 aufgeführten Bestandteile zusammengegeben und homogenisiert wurden.

**Tabelle 6:**

| Bestandteil | Gewichtsteile Härter |
|---|---|
| Basonat® HI 190 (Handelsprodukt der BASF AG) | 23 |
| Desmodur® Z 4470 (70 % in SN) | 64 |
| Butylacetat | 6,5 |
| Solventnaphta® | 6,5 |

### Erläuterungen zu Tabelle 6:

Basonat® HI 190 = handelsüblichen Isocyanurat von Hexamethylendiisocyanat der Firma BASF AG, 90ig in einer Mischung aus Solventnaphta® und Butylacetat
Desmodur® Z 4470 = handelsübliches Isocyanurat von Isophorondiisocyanat der Firma Bayer Material Science AG, 70%ig in Solventnaphta®

### 7. Herstellung der Beschichtungen

Die einzelnen 2 K Klarlacke wurde auf Prüfbleche appliziert, die jeweils mit einer üblichen und bekannten, kathodisch abgeschiedenen, thermisch gehärteten Elektrotauchlackierung, einer üblichen und bekannten, thermisch gehärteten Füllerlackierung und einer während 10 Minuten bei 80°C vorgetrockneten Schicht aus einem handelsüblichen, konventionellen, schwarzen Basislack der Firma BASF Coatings AG beschichtet worden waren, appliziert. Die Basislackschicht und die Klarlackschicht wurden gemeinsam während 22 Minuten bei 140°C gehärtet. Die resultierende Basislackierung wies eine Schichtdicke von 7,5 µm und die Klarlackierung eine Schichtdicke von 40 µm auf.

### 8. Untersuchung der Eigenschaften der resultierenden Beschichtungen

Alle Oberflächen waren hochglänzend und zeigten eine hervorragende Appearance. Auf den resultierenden Oberflächen wurde die Trockenkratzbeständigkeit mit Hilfe des Crockmeter- Tests (9 µm Papierkörnung) bestimmt. Dazu wurde in Anlehnung an EN ISO 105 - X 12 verfahren und der Glanzverlust bei 20° nach 10 Doppelhüben ausgewertet.

**Tabelle 7: Testergebnisse - Crockmetertest**

| Test | Klarlack Beispiel V7 | Klarlack Beispiel 3 | Klarlack Beispiel 4 | Klarlack Beispiel 5 |
|---|---|---|---|---|
| Restglanz nach Crockmeter Test [%] | 15 % | 55 % | 60 % | 66 % |

Die Ergebnisse belegen, dass die Trockenkratzbeständigkeit der Formulierungen durch den Zusatz der Addukte (A2) bis (A4) zusammen mit dem Katalysator deutlich erhöht werden kann. Außerdem zeigen die Versuche, dass der Effekt um so stärker ausgeprägt ist, je mehr grenzflächenaktives Addukt (A) eingesetzt wird.

Die Klarlackfilme der Beispiele 4, 5 und V 7 wurden über 6000 h im sogenannten WOM-CAM 180 Q/B- Test nach VDA-Prüfblatt (E) 621 - 430 Apr 97 und/oder SAE J1960 JUN89 (im Folgenden kurz CAM 180 - Test genannt) hinsichtlich Ihrer Bewitterungsstabilität untersucht. Dabei zeigte sich, dass alle untersuchten Proben auch nach 6000 h keine Rissbildung aufwiesen. Der Glanzgrad der Beispiele 4 und 5 war nach 6000 h mit dem entsprechenden Glanzgrad der Probe des Beispiels V 7 im Rahmen der Messgenauigkeit identisch. Dies belegt die gute Bewitterungsbeständigkeit der modifizierten 2 K Klarlacke.

## Patentansprüche

1. Eine einen Vernetzungsgrad von 5 bis 100% aufweisende Beschichtung (K), die aufgebaut ist aus
1. einer oberflächennahen Beschichtungszone (K1) und
2. einer Volumen-Beschichtungszone (K2),
wobei das Verhältnis der Trockenfilmschichtdicke der oberflächennahen Beschichtungszone (K1) zu der Trockenfilmschichtdicke der Volumen-Beschichtungszone (K2) kleiner als 0,1 ist und
wobei die Beschichtung (K) aus einem Beschichtungsmittel (B) erhältlich ist, welches mindestens zwei unterschledliche, vernetzbare Komponenten (D1) und (D2) enthält, wobei zumindest ein Teil der Komponente (D1) eine oder mehrere oberflächenaktive Struktureinheiten (O) ausgewählt aus der Gruppe der Kohlenwasserstoff-Reste und deren Derivaten sowie aus der Gruppe der Siloxan-Reste aufweist;
**dadurch gekennzeichnet, dass**
(i) die Beschichtung sowohl In der Zone (K1) als auch In der Zone (K2) einen Vernetzungsgrad von 5 bis 100% aufweist und
(ii) die Vernetzungsdichte der Beschichtung in der Zone (K1) höher ist als die Vernetzungsdichte der Beschichtung in der Zone (K2).

2. Beschichtung nach Anspruch 1, **dadurch gekennzeichnet, dass** die zumindest teilweise vernetzte Beschichtung (K) eine chemische Uneinheitlichkeit in Form eines Gradienten senkrecht zur Oberfläche (KO) aufweist.

3. Beschichtung nach Anspruch 2, **dadurch gekennzeichnet, dass** die zumindest teilweise vernetzte Beschichtung (K) eine chemische Uneinheitlichkeit in Form eines Gradienten von Siliciumatomen des Typs (Si 1) und/oder des Typs (Si 2) 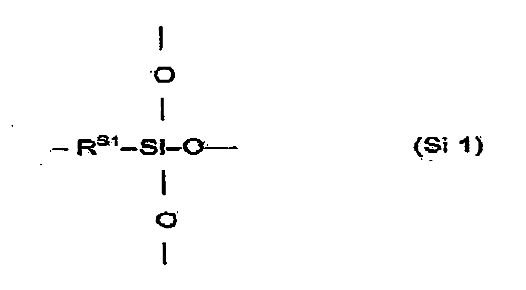 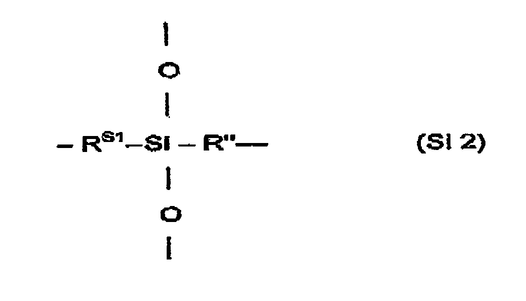 senkrecht zur Oberfläche (KO) aufweist, wobei
R^{S1} = organischer Rest, bevorzugt linearer und/oder verzweigter Alkylen- oder Cycloalkylenrest mit 1 bis 20 Kohlenstoffatomen, insbesondere Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen.

4. Beschichtung nach Anspruch 2 oder 3, **dadurch gekennzeichnet, dass** der Gradient in der chemische Uneinheitlichkeit auch zu einem Gradienten in den physikalischen Eigenschaften senkrecht zur Oberfläche, bevorzugt zu einem Gradienten in der Kratzfestigkeit und/oder Steinschlagbeständigkeit und/oder Rissbeständigkeit und/oder Abwaschbarkeit und/oder Reparaturlackhaftung und/oder Benetzung und/oder optischem Farbeindruck und/oder Appearance führt.

5. Beschichtung nach einem der Ansprüche 2 bis 4, **dadurch gekennzeichnet, dass** der Gradient eine Halbwertstiefe < 1 µm, bevorzugt < 0,1 µm und besonders bevorzugt < 0,05 µm aufweist.

6. Beschichtung (K) nach Anspruch 1, die aufgebaut ist aus
1. einer oberflächennahen Beschichtungszone (K1) und
2. einer Volumen-Beschichtungszone (K2),
wobei
(I) die Beschichtung (K) aus einem Beschichtungsmittel (B) erhältlich ist, welches mindestens zwei unterschiedliche, vernetzbare Komponenten (D1) und (D2) enthält, wobei zumindest ein Teil der Komponente (D1) eine oder mehrere oberflächenaktive Struktureinheiten (O) aufweist,
(II) die Konzentration der Komponente (D1) in der oberflächennahen Beschichtungszone (K1) höher ist als in der Volumen-Beschichtungszone (K2),
**dadurch gekennzeichnet, dass** die Mikroeindringhärte und/oder die TrockenKratzbeständigkeit der zumindest teilweise vernetzten Beschichtung (K) höher ist als die Mikroeindringhärte und/oder die Trocken-Kratzbeständigkeit einer zumindest teilweise vernetzten Beschichtung (K'), die aus einem Beschichtungsmittel (B') erhältlich ist, welches keine vernetzbare Komponente (D1) enthält.

7. Beschichtung nach einem der Ansprüche 1 bis 6, **dadurch gekennzeichnet, dass** die Schichtdicke der oberflächennahen Beschichtungszone (K1) zwischen 1 nm und 500 nm, bevorzugt zwischen 10 nm und 200 nm und besonders bevorzugt zwischen 10 nm und 100 nm und ganz besonders bevorzugt zwischen 10 nm und 60 nm liegt und/oder das Verhältnis der Trockenfilmschichtdicke der oberflächennahen Beschichtungszone (K1) zu der Trockenfilmschichtdicke der Volumen-Beschichtungszone (K2) kleiner als 0,1, bevorzugt kleiner als 0,01, besonders bevorzugt kleiner als 0,005 ist.

8. Beschichtung nach einem der Ansprüche 1 bis 7, **dadurch gekennzeichnet, dass** die vernetzbare Komponente (D1) als vernetzbare Gruppen Silangruppen, insbesondere Alkoxysilangruppen, aufweist.

9. Beschichtung nach einem der Ansprüche 1 bis 8, **dadurch gekennzeichnet, dass** die oberflächenaktiven Strukturelemente (O) ausgewählt sind aus der Gruppe der Kohlenwasserstoff-Reste und deren Derivaten, insbesondere der fluorierten Kohlenwasserstoff-Reste, der Fettsäure-Reste und der Reste von Fettsäurederlvaten sowie aus der Gruppe der ggf. substituierten Siloxan-Reste und besonders bevorzugt der Siloxan-Reste.

10. Beschichtung nach einem der Ansprüche 1 bis 9, **dadurch gekennzeichnet, dass** die venetzbare Komponente (D1) hergestellt worden ist, indem zumindest ein Teil einer Vorstufe der Komponente (D1) und/oder zumindest ein Teil der Komponente (D1) mit einer oder mehreren oberflächenaktiven Verbindungen (OV) modifiziert worden ist.

11. Beschichtung nach Anspruch 10, **dadurch gekennzeichnet, dass**
(i) die oberflächenaktive Verbindung (OV) mindestens eine Hydroxyl-, Epoxy-, Isocyanat-, Carbamat-, Carboxyl-, Anhydrid-, Amin-, und/oder Thiolgruppe und/oder ethylenisch ungesättigte Doppelbindung aufweist und/oder
(ii) die vernetzbare Komponente (D1) und/oder eine Vorstufe der vernetzbaren Komponente (D1) mindestens eine komplementäre funktionelle Gruppe, ausgewählt aus der Gruppe der Hydroxyl-, Epoxy-, Isocyanat-, Carbamat-, Carboxyl-, Anhydrid-, Amin- und/oder Thiolgruppen und/oder ethylenisch ungesättigte Doppelbindungen, aufweist.

12. Beschichtung nach Anspruch 10 oder 11, **dadurch gekennzeichnet, dass** die Verbindung (OV) ein Siloxane der Formel (I) ist 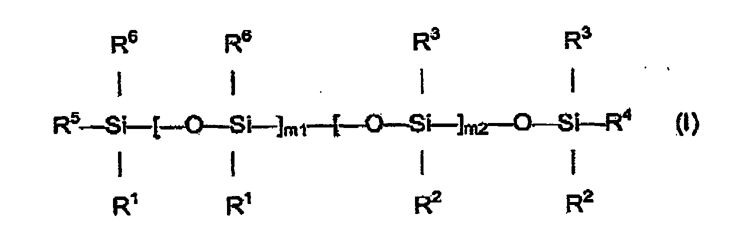 wobei
R¹ bis R⁶ gleiche oder verschiedene Reste sind und
R¹ = Alkyl-, Cycloalkyl-, Aryl- oder Aralkylrest, wobei die Kohlenstoffkette durch nicht benachbarte Sauerstoff-, Schwefel- oder NRa-Gruppen unterbrochen sein kann, mit Fluor substituierte Alkyl-, Cycloalkyl-, Aryl- oder Aralkylreste, wobei Strukturen, die einen Ethylen-Rest zwischen dem Siliciumatom und dem mit Fluor substituierten organischen Rest aufweisen, bevorzugt sind,
R² = Hydroxy, Alkyl-, Cycloalkyl-, Aryl- oder Aralkylrest, wobei die Kohlenstoffkette durch nicht benachbarte Sauerstoff-, Schwefel- oder NRa-Gruppen unterbrochen sein kann.
R³ und R⁶ = Wasserstoff, Alkyl-, Cycloalkyl-, Aryl- oder Aralkylrest, wobei die Kohlenstoffkette durch nicht benachbarte Sauerstoff-, Schwefel- oder NRa-Gruppen unterbrochen sein kann, mit Fluor substituierte Alkyl-, Cycloalkyl-, Aryl- oder Aralkylreste, wobei Strukturen, die einen Ethylen-Rest zwischen dem Siliciumatom und dem mit Fluor substituierten organischen Rest aufweisen, bevorzugt sind,
R⁴ und R⁵ = Wasserstoff, Hydroxy, Alkyl-, Cycloalkyl-, Aryl- oder Aralkylrest, wobei die Kohlenstoffkette durch nicht benachbarte Sauerstoff , Schwefel- oder NRa-Gruppen unterbrochen sein kann,
wobei mindestens einer der Reste R², R⁴ und R⁵ zusätzlich eine funktionelle Gruppe trägt, die reaktiv gegenüber der komplementären funktionellen Gruppen der Komponente (D1) ist,
und
m₁ = 1 bis 80, bevorzugt 3 bis 20 und
m₂ = 0 bis 80, bevorzugt 0 bis 10.

13. Beschichtung nach Anspruch 10 oder 11, **dadurch gekennzeichnet, dass** die Verbindung (OV) ein Siloxan der Formel (III) ist 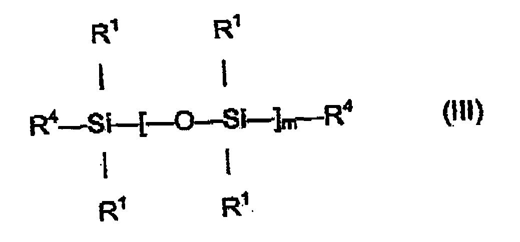 wobei
R¹ und R⁴ die vorstehend genannte Bedeutung haben und Methyl-, Ethyl- und Phenylreste sowie Alkylreste, die zum Teil mit Fluor bzw. der funktionellen Gruppe substituiert sind, bevorzugt sind und R¹ besonders bevorzugt ein Methylrest, und/oder die funktionelle Gruppe bevorzugt eine Hydroxylgruppe ist,
m = 1 bis 80, bevorzugt 3 bis 20 und besonders bevorzugt 5 bis 12.

14. Beschichtung nach einem der Ansprüche 1 bis 13, **dadurch gekennzeichnet, dass** die vernetzbare Komponente (D1) mindestens einen reaktiven Rest der Formel (VI)
-N R"'-C(O)-N-(LSiR"x(QR')3-x)n(L'-SiR"y(OR')3-y)m (VI)
mit
R'" = Wasserstoff, Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, R' = Wasserstoff, Alkyl oder Cycloalkyl, wobei die Kohlenstoffkette durch nicht benachbarte Sauerstoff-, Schwefel- oder NRa-Gruppen unterbrochen sein kann,
L, L' = linearer und/oder verzweigter Alkylen- oder Cycloalkylenrest mit 1 bis 20 Kohlenstoffatomen, insbesondere Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann,
n = 0 bis 2,
m = 0 bis 2,
m+n = 2, sowie
x,y = 0 bis 2
aufweist.

15. Beschichtung nach einem der Ansprüche 1 bis 14, **dadurch gekennzeichnet, dass** das Beschichtungsmittel (B) die Komponente (D1) in einer Menge von 0,1 bis 35 Gew.-%, insbesondere 0,5 bis 15 Gew.-%, und/oder den Katalysator (C) in einer Menge von 0,1 bis 15 Gew.-%, insbesondere von 0,5 bis 5 Gew.-%, und/oder die Komponente (D2) in einer Menge von 50 bis 99,8 Gew.-%, insbesondere von 80 bis 99,4 Gew-%, jeweils bezogen auf die nichtflüchtigen Bestandteile des Beschichtungsmittels (B), enthält.

16. Beschichtung nach einem der Ansprüche 1 bis 15, **dadurch gekennzeichnet, dass** die vernetzbare Komponente (D2) aus einem oder mehreren Bindemitteln (BM) und ggf. einem oder mehreren Vemetzungsmitteln (VM) besteht.

17. Beschichtung nach Anspruch 16, **dadurch gekennzeichnet, dass** die Bindemittel (BM) ausgewählt sind aus der Gruppe der oligomeren und/oder polymeren Verbindungen, die Acrylatgruppen, Methacrylatgruppen, Hydroxylgruppen, Carbamatgruppen, Epoxygruppen, Isocyanatgruppen und Carboxylgruppen, bevorzugt Hydroxylgruppen und/oder Carbamatgruppen, aufweisen und/oder die Vernetzungsmittel (VM) ausgewählt sind aus der Gruppe der Aminoplastharze, unblockierten Di- und/oder Polyisocyanate, blockierten Di- und/oder Polyisocyanate, Polyepoxide, Polycarbonsäuren, Polyanhydride und der Polyole.

18. Effekt- und/oder farbgebende Mehrschichtlackierung aus mindestens einer pigmentierten Beschichtung und einer darauf angeordneten transparenten Beschichtung, **dadurch gekennzeichnet, dass** die transparente Beschichtung eine Beschichtung nach einem der Ansprüche 1 bis 17 ist.

19. Verfahren zur Herstellung der Mehrschichtlackierung nach Anspruch 18, bei dem auf ein ggf. vorbeschichtetes Substrat mindestens ein pigmentiertes Beschichtungsmittel und auf mindestens einen Teil der so erhaltenen pigmentierten Beschichtung mindestens ein transparentes Beschichtungsmittel (B) aufgebracht und gehärtet wird.

20. Verfahren nach Anspruch 19, **dadurch gekennzeichnet, dass** es in der Automobilserien- und/oder Nutzfahrzeug- und/oder Reparaturlackierung, zur Beschichtung von Karosserie-innen- oder -Außenbauteilen oder von Bauteilen für den Schiff- und Flugzeugbau oder von Bauteilen für Haushalts- und Elektrogeräte oder von Kunststoffformteilen oder Folien eingesetzt wird.

## Claims

1. A coating (K) which has a degree of crosslinking of from 5% to 100% and is composed of
1. a near-surface coating zone (K1) and
2. a volume coating zone (K2),
the ratio of the dry film thickness of the near-surface coating zone (K1) to the dry film thickness of the volume coating zone (K2) being less than 0.1 and
the coating (K) being obtainable from a coating composition (B) which comprises at least two different crosslinkable components (D1) and (D2), at least part of component (D1) having one or more surface-active structural units (O) selected from the group consisting of hydrocarbon radicals and their derivatives and also from the group consisting of siloxane radicals;
**characterized in that**
(i) the coating both in zone (K1) and in zone (K2) has a degree of crosslinking of from 5% to 100%, and
(ii) the crosslinking density of the coating in zone (K1) is higher than the crosslinking density of the coating in zone (K2).

2. Coating according to Claim 1, **characterized in that** the at least partly crosslinked coating (K) exhibits a chemical disuniformity in the form of a gradient perpendicular to the surface (KO).

3. Coating according to Claim 2, **characterized in that** the at least partly crosslinked coating (K) exhibits a chemical disuniformity in the form of a gradient of silicon atoms of type (Si 1) and/or of type (Si 2) 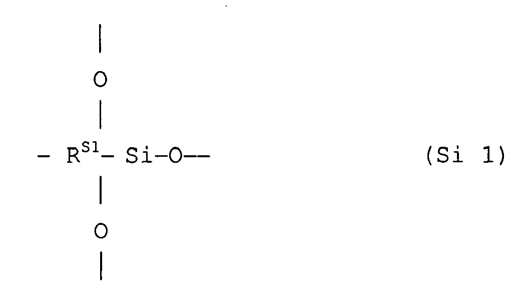 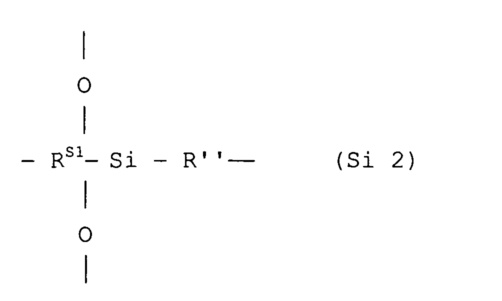 perpendicular to the surface (KO), where R^{S1} = organic radical, preferably linear and/or branched alkylene or cycloalkylene radical having 1 to 20 carbon atoms, more particularly alkylene radical having 1 to 4 carbon atoms,
R" = alkyl, cycloalkyl, aryl or aralkyl, the carbon chain possibly being interrupted by nonadjacent oxygen, sulfur or NRa groups, with Ra = alkyl, cycloalkyl, aryl or aralkyl, preferably R'' = alkyl radical, more particularly having 1 to 6 C atoms.

4. Coating according to Claim 2 or 3, **characterized in that** the gradient in the chemical disuniformity also leads to a gradient in the physical properties perpendicular to the surface, preferably to a gradient in the scratch resistance and/or stonechip resistance and/or crack resistance and/or washability and/or refinish adhesion and/or wetting and/or optical coloring and/or appearance.

5. Coating according to any one of Claims 2 to 4, **characterized in that** the gradient has a half-value depth < 1 µm, preferably < 0.1 µm, and more preferably < 0.05 µm.

6. Coating (K) according to Claim 1, which is composed of
1. a near-surface coating zone (K1) and
2. a volume coating zone (K2),
**characterized in that**
(I) the coating (K) being obtainable from a coating composition (B) which comprises at least two different crosslinkable components (D1) and (D2), at least part of component (D1) having one or more surface-active structural units (O),
(II) the concentration of component (D1) in the near-surface coating zone (K1) being higher than in the volume coating zone (K2),
**characterized in that** the micropenetration hardness and/or the dry scratch resistance of the at least partly crosslinked coating (K) is higher than the micropenetration hardness and/or the dry scratch resistance of an at least partly crosslinked coating (K') obtainable from a coating composition (B') which contains no crosslinkable component (D1).

7. Coating according to any one of Claims 1 to 6, **characterized in that** the film thickness of the near-surface coating zone (K1) is between 1 nm and 500 nm, preferably between 10 nm and 200 nm, and more preferably between 10 nm and 100 nm, and very preferably between 10 nm and 50 nm, and/or the ratio of the dry film thickness of the near-surface coating zone (K1) to the dry film thickness of the volume coating zone (K2) is less than 0.1, preferably less than 0.01, more preferably less than 0.005.

8. Coating according to any one of Claims 1 to 7, **characterized in that** the crosslinkable component (D1) has silane groups as crosslinkable groups, more particularly alkoxysilane groups.

9. Coating according to any one of Claims 1 to 8, **characterized in that** the surface-active structural elements (O) are selected from the group consisting of hydrocarbon radicals and their derivatives, more particularly of fluorinated hydrocarbon radicals, fatty acid radicals, and the radicals of fatty acid derivatives, and also from the group consisting of unsubstituted or substituted siloxane radicals, and more preferably from siloxane radicals.

10. Coating according to any one of Claims 1 to 9, **characterized in that** the crosslinkable component (D1) has been prepared by modifying at least part of a precursor of component (D1) and/or at least part of component (D1) with one or more surface-active compounds (OV).

11. Coating according to Claim 10, **characterized in that**
(i) the surface-active compound (OV) has at least one hydroxyl, epoxy, isocyanate, carbamate, carboxyl, anhydride, amine and/or thiol group and/or ethylenically unsaturated double bond and/or
(ii) the crosslinkable component (D1) and/or a precursor of the crosslinkable component (D1) has at least one complementary functional group selected from the group consisting of hydroxyl, epoxy, isocyanate, carbamate, carboxyl, anhydride, amine and/or thiol groups and/or ethylenically unsaturated double bonds.

12. Coating according to Claim 10 or 11, **characterized in that** the compound (OV) is a siloxane of the formula (I) 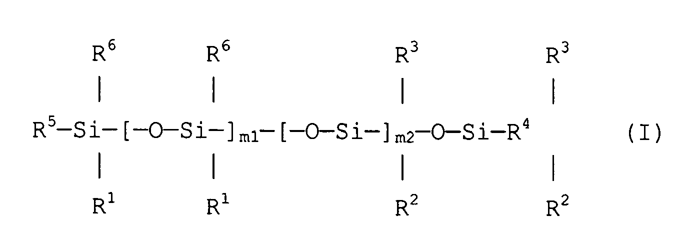 where
R¹ to R⁶ are identical or different radicals and R¹ = alkyl, cycloalkyl, aryl or aralkyl radical, the carbon chain possibly being interrupted by nonadjacent oxygen, sulfur or NRa groups, or fluorine-substituted alkyl, cycloalkyl, aryl or aralkyl radicals, preference being given to structures which have an ethylene radical between the silicon atom and the fluorine-substituted organic radical,
R² =hydroxyl, alkyl, cycloalkyl, aryl or aralkyl radical, the carbon chain possibly being interrupted by nonadjacent oxygen, sulfur or NRa groups,
R³ and R⁶ = hydrogen, alkyl, cycloalkyl, aryl or aralkyl radical, the carbon chain possibly being interrupted by nonadjacent oxygen, sulfur or NRa groups, or fluorine-substituted alkyl, cycloalkyl, aryl or aralkyl radicals, preference being given to structures which have an ethylene radical between the silicon atom and the fluorine-substituted organic radical,
R⁴ and R⁵ = hydrogen, hydroxyl, alkyl, cycloalkyl, aryl or aralkyl radical, the carbon chain possibly being interrupted by nonadjacent oxygen, sulfur or NRa groups,
at least one of the radicals R², R⁴, and R⁵ additionally carrying a functional group which is reactive toward the complementary functional groups of component (D1),
and
m₁ = 1 to 80, preferably 3 to 20, and
m₂ = 0 to 80, preferably 0 to 10.

13. Coating according to Claim 10 or 11, **characterized in that** the compound (OV) is a siloxane of the formula (III) 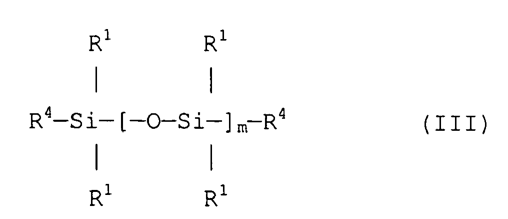 where
R¹ and R⁴ are as defined above and preference is given to methyl, ethyl and phenyl radicals and also to alkyl radicals partly substituted by fluorine and/or the functional group, and R¹ more preferably is a methyl radical, and/or the functional group is preferably a hydroxyl group,
m = 1 to 80, preferably 3 to 20, and more preferably 5 to 12.

14. Coating according to any one of Claims 1 to 13, **characterized in that** the crosslinkable component (D1) has at least one reactive radical of the formula (VI)
-N R"'-C(O)-N-(L-SiR"x(OR')3-x)n(L'-SiR"y(OR')3-y)m (VI)
where
R"' = hydrogen, alkyl, cycloalkyl, aryl or aralkyl, the carbon chain possibly being interrupted by nonadjacent oxygen, sulfur or NRa groups, with Ra = alkyl, cycloalkyl, aryl or aralkyl,
R' = hydrogen, alkyl or cycloalkyl, the carbon chain possibly being interrupted by nonadjacent oxygen, sulfur or NRa groups,
L, L' = linear and/or branched alkylene or cycloalkylene radical having 1 to 20 carbon atoms, more particularly alkylene radical having 1 to 4 carbon atoms,
R" = alkyl, cycloalkyl, aryl or aralkyl, the carbon chain possibly being interrupted by nonadjacent oxygen, sulfur or NRa groups,
n = 0 to 2,
m = 0 to 2,
m+n = 2 , and
x,y = 0 to 2.

15. Coating according to any one of Claims 1 to 14, **characterized in that** the coating composition (B) contains component (D1) in an amount of 0.1 to 35% by weight, more particularly of 0.5 to 15% by weight, and/or the catalyst (C) in an amount of 0.1 to 15% by weight, more particularly of 0.5 to 5% by weight, and/or component (D2) in an amount of 50 to 99.8% by weight, more particularly of 80 to 99.4% by weight, based in each case on the nonvolatiles of the coating composition (B).

16. Coating according to any one of Claims 1 to 15, **characterized in that** the crosslinkable component (D2) is composed of one or more binders (BM) and if appropriate of one or more crosslinking agents (VM).

17. Coating according to Claim 16, **characterized in that** the binders (BM) are selected from the group consisting of oligomeric and/or polymeric compounds which have acrylate groups, methacrylate groups, hydroxyl groups, carbamate groups, epoxy groups, isocyanate groups, and carboxyl groups, preferably hydroxyl groups and/or carbamate groups, and/or the crosslinking agents (VM) are selected from the group consisting of amino resins, nonblocked di- and/or polyisocyanates, blocked di- and/or polyisocyanates, polyepoxides, polycarboxylic acids, polyanhydrides, and the polyols.

18. Multicoat effect and/or color paint system comprising at least one pigmented coating and, disposed thereon, a transparent coating, **characterized in that** the transparent coating is a coating according to any one of Claims 1 to 17.

19. Process for producing the multicoat paint system according to Claim 18, in which an unprecoated or precoated substrate is coated with at least one pigmented coating composition and at least part of the resulting pigmented coating is coated with at least one transparent coating composition (B), and curing is carried out.

20. Process according to Claim 19, **characterized in that** it is employed in automotive OEM finishing and/or commercial vehicle finishing and/or refinish, for the coating of interior or exterior bodywork components or of components for shipbuilding and aircraft construction or of components for household appliances and electrical appliances or of plastics moldings or films.

## Revendications

1. Revêtement (K) présentant un taux de réticulation de 5 à 100%, qui est constitué par
1. une zone de revêtement (K1) proche de la surface et
2. une zone de revêtement (K2) volumique,
- le rapport de l'épaisseur de couche du film sec de la zone de revêtement (K1) proche de la surface à l'épaisseur de la couche du film sec de la zone de revêtement (K2) volumique étant inférieur à 0,1 et
- le revêtement (K) pouvant être obtenu à partir d'un agent de revêtement (B) qui contient au moins deux composants (D1) et (D2) réticulables différents, où au moins une partie du composant (D1) présente une ou plusieurs structures tensioactives (O) choisies dans le groupe des radicaux hydrocarbonés et leurs dérivés ainsi que dans le groupe des radicaux siloxane ;
**caractérisé en ce que**
(i) le revêtement présente un taux de réticulation de 5 à 100%, tant dans la zone (K1) que dans la zone (K2) et
(ii) la densité de réticulation du revêtement dans la zone (K1) est supérieure à la densité de réticulation du revêtement dans la zone (K2).

2. Revêtement selon la revendication 1, **caractérisé en ce que** le revêtement (K) au moins partiellement réticulé présente une hétérogénéité chimique sous forme d'un gradient perpendiculaire à la surface (KO).

3. Revêtement selon la revendication 2, **caractérisé en ce que** le revêtement (K) au moins partiellement réticulé présente une hétérogénéité chimique sous forme d'un gradient d'atomes de silicium du type (Si 1) et/ou du type (Si 2) 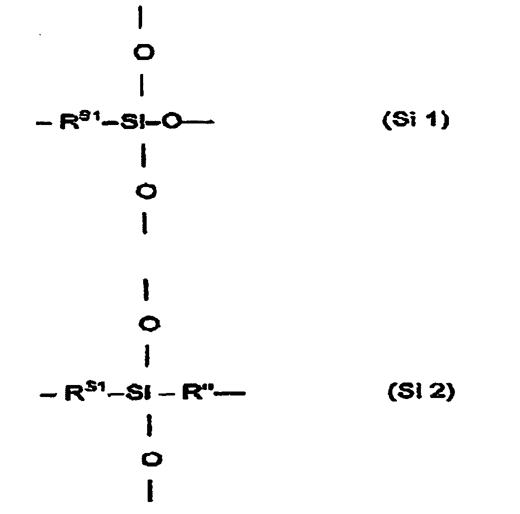 perpendiculaire à la surface (KO), où
R^{S1} = un radical organique, de préférence un radical alkylène linéaire et/ou ramifié ou cycloalkylène, comprenant 1 à 20 atomes de carbone, en particulier un radical alkylène comprenant 1 à 4 atomes de carbone,
R" = alkyle, cycloalkyle, aryle ou aralkyle, où la chaîne carbonée peut être interrompue par des groupes oxygène, soufre ou NRa non adjacents, avec Ra = alkyle, cycloalkyle, aryle ou aralkyle, de préférence R" = un radical alkyle, comprenant en particulier 1 à 6 atomes de carbone.

4. Revêtement selon la revendication 2 ou 3, **caractérisé en ce que** le gradient dans l'hétérogénéité chimique conduit également à un gradient dans les propriétés physiques perpendiculaire à la surface, de préférence à un gradient de la résistance aux rayures et/ou de la résistance à l'impact par des gravillons et/ou de la résistance aux fissures et/ou de la lavabilité et/ou de l'adhérence de laques de réparation et/ou du mouillage et/ou de l'impression visuelle de la couleur et/ou de l'aspect.

5. Revêtement selon l'une quelconque des revendications 2 à 4, **caractérisé en ce que** le gradient présente une profondeur à mi-hauteur < 1 µm, de préférence < 0,1 µm et de manière particulièrement préférée < 0,05 µm.

6. Revêtement (K) selon la revendication 1, qui est constitué par
1. une zone de revêtement (K1) proche de la surface et
2. une zone de revêtement (K2) volumique,
où
(i) le revêtement (K) peut être obtenu à partir d'un agent de revêtement (B) qui contient au moins deux composants (D1) et (D2) réticulables différents, où au moins une partie du composant (D1) présente une ou plusieurs structures tensioactives (O) ;
(ii) la concentration du composant (D1) dans la zone de revêtement (K1) proche de la surface est supérieure à celle dans la zone de revêtement (K2) volumique,
**caractérisé en ce que** la dureté à la micro-pénétration et/ou la résistance aux rayures à sec du revêtement au moins partiellement réticulé (K) est supérieure à la dureté à la micro-pénétration et/ou à la résistance aux rayures à sec d'un revêtement (K') au moins partiellement réticulé, qui peut être obtenu à partir d'un agent de revêtement (B') qui ne contient pas de composant réticulable (D1).

7. Revêtement selon l'une quelconque des revendications 1 à 6, **caractérisé en ce que** l'épaisseur de couche de la zone de revêtement (K1) proche de la surface est située entre 1 nm et 500 nm, de préférence entre 10 nm et 200 nm et de manière particulièrement préférée entre 10 nm et 100 nm et de manière tout particulièrement préférée entre 10 nm et 50 nm et/ou le rapport de l'épaisseur de couche du film sec de la zone de revêtement (K1) proche de la surface à l'épaisseur de la couche du film sec de la zone de revêtement (K2) volumique est inférieur à 0,1, de préférence inférieur à 0,01, de manière particulièrement préférée inférieur à 0,005.

8. Revêtement selon l'une quelconque des revendications 1 à 7, **caractérisé en ce que** le composant réticulable (D1) présente comme groupes réticulables des groupes silane, en particulier des groupes alcoxysilane.

9. Revêtement selon l'une quelconque des revendications 1 à 8, **caractérisé en ce que** les éléments de structure tensioactifs (O) sont choisis dans le groupe des radicaux hydrocarbonés et leurs dérivés, en particulier des radicaux hydrocarbonés fluorés, des radicaux d'acides gras et des radicaux de dérivés d'acides gras ainsi que dans le groupe des radicaux siloxane le cas échéant substitués et de manière particulièrement préférée des radicaux siloxane.

10. Revêtement selon l'une quelconque des revendications 1 à 9, **caractérisé en ce que** le composant réticulable (D1) a été préparé **en ce qu'**au moins une partie d'un précurseur du composant (D1) et/ou au moins une partie du composant (D1) a été modifiée par un ou plusieurs composés tensioactifs (OV) .

11. Revêtement selon la revendication 10, **caractérisé**
(i) **en ce que** le composant tensioactif (OV) présente au moins un groupe hydroxyle, époxy, isocyanate, carbamate, carboxyle, anhydride, amine et/ou thiol et/ou au moins une double liaison éthyléniquement insaturée et/ou
(ii) **en ce que** le composant réticulable (D1) et/ou un précurseur du composant réticulable (D1) présente au moins un groupe fonctionnel complémentaire, choisi dans le groupe des groupes hydroxyle, époxy, isocyanate, carbamate, carboxyle, anhydride, amine et/ou thiol et/ou des doubles liaisons éthyléniquement insaturées.

12. Revêtement selon la revendication 10 ou 11, **caractérisé en ce que** le composé (OV) est un siloxane de formule (I) 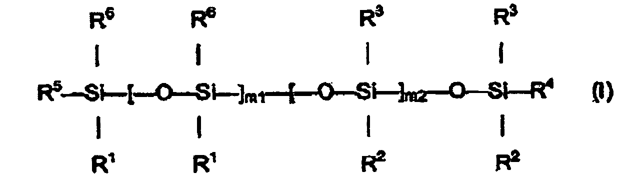 où
R¹ à R⁶ sont des radicaux identiques ou différents et
R¹ = un radical alkyle, cycloalkyle, aryle ou aralkyle, où la chaîne carbonée peut être interrompue par des groupes oxygène, soufre ou NRa non adjacents, des radicaux alkyle, cycloalkyle, aryle ou aralkyle substitués par fluor, où les structures, qui présentent un radical éthylène entre l'atome de silicium et le radical organique substitué par fluor, sont préférées,
R² = hydroxy, un radical alkyle, cycloalkyle, aryle ou aralkyle, où la chaîne carbonée peut être interrompue par des groupes oxygène, soufre ou NRa non adjacents,
R³ et R⁶ = hydrogène, un radical alkyle, cycloalkyle, aryle ou aralkyle, où la chaîne carbonée peut être interrompue par des groupes oxygène, soufre ou NRa non adjacents, des radicaux alkyle, cycloalkyle, aryle ou aralkyle substitués par fluor, où les structures, qui présentent un radical éthylène entre l'atome de silicium et le radical organique substitué par fluor, sont préférées,
R⁴ et R⁵ = hydrogène, hydroxy, un radical alkyle, cycloalkyle, aryle ou aralkyle, où la chaîne carbonée peut être interrompue par des groupes oxygène, soufre ou NRa non adjacents,

13. Revêtement selon la revendication 10 ou 11, **caractérisé en ce que** le composé (OV) est un siloxane de formule (III) 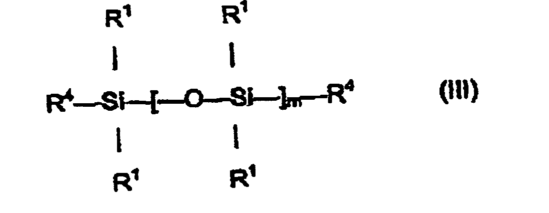 où
R¹ et R⁴ présentent la signification susmentionnée et les radicaux méthyle, éthyle et phényle ainsi que les radicaux alkyle partiellement substitués par fluor ou le groupe fonctionnel étant préférés et R¹ représentant de manière particulièrement préférée un radical méthyle et/ou le groupe fonctionnel étant de préférence un groupe hydroxyle,
m = 1 à 80, de préférence 3 à 20 et de manière particulièrement préférée 5 à 12.

14. Revêtement selon l'une quelconque des revendications 1 à 13, **caractérisé en ce que** le composant réticulable (D1) présente au moins un radical réactif de formule (VI)
où au moins un des radicaux R², R⁴ et R⁶ porte en outre un groupe fonctionnel, qui est réactif par rapport aux groupes fonctionnels complémentaires du composant (D1), et
m₁ = 1 à 80, de préférence 3 à 20 et
m₂ = 0 à 80, de préférence 0 à 10.
-NR'''C(O)-N-(L-SiR"x(OR')3-x)n(L'-SiR"y(OR')3-y)m (VI)
avec
R"' = hydrogène, alkyle, cycloalkyle, aryle ou aralkyle, où la chaîne carbonée peut être interrompue par des groupes oxygène, soufre ou NRa non adjacents, avec Ra = alkyle, cycloalkyle, aryle ou aralkyle,
R' = hydrogène, alkyle ou cycloalkyle, où la chaîne carbonée peut être interrompue par des groupes oxygène, soufre ou NRa non adjacents,
L, L' = un radical alkylène linéaire et/ou ramifié ou cycloalkylène, comprenant 1 à 20 atomes de carbone, en particulier un radical alkylène comprenant 1 à 4 atomes de carbone,
R" = alkyle, cycloalkyle, aryle ou aralkyle, où la chaîne carbonée peut être interrompue par des groupes oxygène, soufre ou NRa non adjacents,
n = 0 à 2,
m = 0 à 2,
m + n = 2, et
x, y = 0 à 2.

15. Revêtement selon l'une quelconque des revendications 1 à 14, **caractérisé en ce que** l'agent de revêtement (B) contient le composant (D1) en une quantité de 0,1 à 35% en poids, en particulier de 0,5 à 15% en poids, et/ou le catalyseur (C) en une quantité de 0,1 à 15% en poids, en particulier de 0,5 à 5% en poids, et/ou le composant (D2) en une quantité de 50 à 99,8% en poids, en particulier de 80 à 99,4% en poids, à chaque fois par rapport aux constituants non volatils de l'agent de revêtement (B).

16. Revêtement selon l'une quelconque des revendications 1 à 15, **caractérisé en ce que** le composant réticulable (D2) est constitué par un ou plusieurs liants (BM) et le cas échéant un ou plusieurs réticulants (VM).

17. Revêtement selon la revendication 16, **caractérisé en ce que** les liants (BM) sont choisis dans le groupe des composés oligomères et/ou polymères, qui présentent des groupes acrylate, des groupes méthacrylate, des groupes hydroxyle, des groupes carbamate, des groupes époxy, des groupes isocyanate et des groupes carboxyle, de préférence des groupes hydroxyle et/ou des groupes carbamate, et/ou les réticulants (VM) sont choisis dans le groupe des résines aminoplaste, des diisocyanates et/ou polyisocyanates non bloqués, des diisocyanates et/ou des polyisocyanates bloqués, des polyépoxydes, des poly(acides carboxyliques), des polyanhydrides et des polyols.

18. Laquage à plusieurs couches conférant un effet et/ou une couleur constitué par au moins un revêtement pigmenté et un revêtement transparent disposé sur celui-ci, **caractérisé en ce que** le revêtement transparent est un revêtement selon l'une quelconque des revendications 1 à 17.

19. Procédé pour la préparation du laquage à plusieurs couches selon la revendication 18, dans lequel on applique et on durcit sur un substrat le cas échéant revêtu au préalable au moins un agent de revêtement pigmenté et on applique et on durcit sur au moins une partie du revêtement pigmenté ainsi obtenu au moins un agent de revêtement transparent (B).

20. Procédé selon la revendication 19, **caractérisé en ce qu'**il est utilisé dans le laquage de séries de voitures et/ou de véhicules utilitaires et/ou de réparation, pour le revêtement de pièces intérieures ou extérieures de carrosserie ou de pièces pour la construction de bateaux et d'avions ou de pièces pour les appareils domestiques et électriques ou de pièces moulées en matériau synthétique ou de feuilles.
